Europäisches Patentamt

European Patent Office

Office européen des brevets

(19)

(11) Veröffentlichungsnummer: **0 276 402 B1**

# EUROPÄISCHE PATENTSCHRIFT

(12)

(45) Veröffentlichungstag der Patentschrift: **22.05.91**

(51) Int. Cl.⁵: **G01D 5/34**

(21) Anmeldenummer: **87117230.0**

(22) Anmeldetag: **23.11.87**

(54) **Hochgenauer Winkellagegeber mit fotoelektrisch abtastbaren Spuren.**

(30) Priorität: **22.12.86 DE 3644010**

(43) Veröffentlichungstag der Anmeldung:
**03.08.88 Patentblatt 88/31**

(45) Bekanntmachung des Hinweises auf die
Patenterteilung:
**22.05.91 Patentblatt 91/21**

(84) Benannte Vertragsstaaten:
**CH DE ES FR GB IT LI SE**

(56) Entgegenhaltungen:
**WO-A-87/00619**       **CH-A- 441 781**
**DE-B- 1 274 363**       **DE-C- 592 625**
**FR-A- 2 266 889**       **GB-A- 1 169 698**

**PATENT ABSTRACTS OF JAPAN, Band 9, Nr.
122 (P-359)[1845], 28. Mai 1985; & JP-A-60
8714 (TAMAGAWA SEIKI K.K.) 17-01-1985**

(73) Patentinhaber: **Siemens Aktiengesellschaft
Wittelsbacherplatz 2
W-8000 München 2(DE)**

(72) Erfinder: **Cuylen, Michael
Kantstrasse 69
W-8502 Zirndorf(DE)**
Erfinder: **Hübsch, Bernd, Dipl.-Ing. (FH)
Benditstrasse 12
W-8510 Fürth(DE)**

## Beschreibung

Die Erfindung betrifft einen hochgenauen Winkellagegeber mit fotoelektrisch abtastbaren Spuren gemäß dem Oberbegriff des Anspruchs 1.

Bevorzugt bei Werkzeugmaschinen, Handhabungsautomaten ("Roboter") und in der Fahrzeugtechnik werden Winkellagegeber eingesetzt, um die absolute Winkellage einer drehbaren Achse der jeweiligen Maschine bezüglich einer als Winkelnullpunkt vorgegebenen Referenzlage zu erfassen. Hierzu können einfach aufgebaute Inkrementallagegeber eingesetzt werden, welche bei Bewegung der Achse am feststehenden Teil des Meßsystems vorbeilaufende inkrementelle Wegmarken drehrichtungsabhängig zählen. Die aktuelle Zählsumme ist dabei ein Maß für die momentane Lage der Achse bezogen auf die vorgegebene Referenzlage. Ein z.B. durch einen kurzzeitigen Spannungsausfall bedingter Verlust dieser Zählsumme hat jedoch zur Folge, daß diese z.B. durch Rückdrehen der Achse bis zum Winkelnullpunkt in der Referenzlage auf relativ umständliche Art und Weise wiedergewonnen werden muß.

Dies kann beim Einsatz von Winkellagegebern vermieden werden, welche bei Stillstand der drehbaren Achse unabhängig von dem unter Umständen unbekannten Drehweg einer vorhergegangenen Bewegung sofort, z.B. im Moment der Wiederkehr der Versorgungsspannung, die aktuelle absolute Winkellage ermitteln. Bei bekannten Absolutlagegebern wird dies mit Hilfe eines auf einer Geberscheibe aufgebrachten digitalen Codes bewerkstelligt, welcher aus einer Vielzahl von in mehreren parallelen Spuren angeordneten binären Einzelinformationen besteht. Die aktuelle Winkellage und somit die mit Hilfe dieser Codierung maximal erreichbare Winkelauflösung wird durch die Größe der kleinsten binären Informationseinheit des digitalen Codes auf einer der Spuren bestimmt. Die Anzahl der für den binären Code notwendigen Spuren kann bei einer hohen geforderten Winkelgenauigkeit des Winkellagegebers rasch hohe Werte annehmen (z.B. 16). Mit einer solch hohen Zahl von abzutastenden binärcodierten Spuren sind jedoch die beiden konträren Anforderungen, nämlich zum einen die angestrebte zunehmende Verkleinerung der äußeren Abmessungen eines Winkellagegebers und zum anderen die ständig steigenden Anforderungen an dessen Winkelauflösungsvermögen nur schwer gleichzeitig zu erfüllen.

Aus den "Patent Abstracts of Japan", Band 9, Nr. 122 (P-359) [1845], 28. Mai 1985 ist ein Winkellagegeber mit einer drehbaren Geberscheibe bekannt, auf der konzentrische, fotoelektrisch abtastbare Spuren ringförmig angeordnet sind. Zur absoluten Lagebestimmung dient im wesentlichen eine einzige Spur, deren Lichtdurchlässigkeit so gestaltet ist, daß bei deren Abtastung und einer vollständigen Drehung der Geberscheibe ein Meßsignal gebildet wird, welches eine periodische, dreieckförmige Funktion des Drehwinkels darstellt. Der bekannte Winkellagegeber hat allerdings den Nachteil, daß insbesondere aufgrund des Fehlers von weiteren Spuren mit äquidistanten, flächengleichen und balkenförmig über die Spurbreite verlaufenden Bereichen mit abwechselnd hoher und niedriger Lichtdurchlässigkeit, die Genauigkeit in der Detektion der aktuellen absoluten Winkellage relativ beschränkt ist.

Der Erfindung liegt somit die Aufgabe zugrunde, einen hochgenauen Winkellagegeber bereitzustellen, der mit einer möglichst geringen Anzahl von bevorzugt analog abzutastenden Spuren eine hochgenaue Detektion der aktuellen absoluten Winkellage ermöglicht. Insbesondere soll hiermit nicht nur die Identifikation des zur jeweiligen Winkellage der drehbaren Achse gehörigen Inkrementes einer Inkrementalspur möglich sein, sondern darüber hinausgehend die Bestimmung der absoluten Winkellage bei Stillstand der Achse mit einer im Vergleich zur Auflösung der Inkrementalspur noch größeren Auflösung möglich sein.

Diese Aufgabe wird durch die kennzeichnenden Merkmale des Anspruchs 1 gelöst. Vorteilhafte weitere Ausgestaltungen der Erfindung sind in den abhängigen Ansprüchen angegeben.

Bei dem erfindungsgemäßen Winkellagegeber kann die fotoelektrische Abtastung der Spuren in der Weise erfolgen, daß für jede Spur mindestens eine Lichtquelle und mindestens ein Lichtdetektor vorgesehen ist, welche auf gegenüberliegenden Seite der Geberscheibe ortsfest angebracht sind. In diesem Fall wird das durch die betreffende Spur hindurchtretende Licht vom Lichtdetektor erfaßt ("Durchlichtverfahren"). Eine weitere Möglichkeit der fotoelektrischen Abtastung besteht darin, daß Lichtquelle und Lichtdetektor auf der gleichen Seite der Geberscheibe ortsfest angebracht sind, so daß das von der betreffenden Spur reflektierte Licht vom Lichtdetektor erfaßt wird ("Auflichtverfahren"). In einer weiteren Ausführungsform ist es möglich, eine einzige, alle Spuren gemeinsam bestrahlende und insbesondere balkenförmig, quer zu den Spuren angeordnete Lichtquelle vorzusehen. Für den erfindungsgemäßen Winkellagegeber ist jede der beschriebenen Arten der fotoelektrischen Abtastung der Spuren verwendbar.

Es ist ein besonderer Vorteil der Erfindung, daß bei den auf der Geberscheibe angeordneten Spuren nicht zwischen den analog, im Stillstand abzutastenden Spuren und den bei Drehung der Scheibe inkremental durch Zählung der vorbeilaufenden Wegmarken abzutastenden Spuren unterschieden wird. Vielmehr sind zumindest einige der Spuren dazu geeignet, sowohl bei Stillstand der Geberscheibe mit zur hochgenauen Absolutlagebestimmung zu dienen, als auch bei Drehung der Scheibe zur Bestimmung der relativen Absolutlage über Zählung der zurückgelegten Weginkremente. Auf diese Weise ist es möglich, die Gesamtanzahl der auf die Geberscheibe aufzubringenden Spuren, und damit den Durchmesser der Geberscheibe selbst im Vergleich zu den im Stand der Technik bekannten Absolutlagegebern drastisch zu verringern, ohne daß hierdurch gleichzeitig das gewünschte hohe Winkelauflösungsvermögen eingeschränkt werden muß. Es ist ein weiterer Vorteil des erfindungsgemäßen Winkellagegebers, daß ebenfalls ohne die zur absoluten Winkellageerfassung notwendige Anzahl der Spuren erhöhen zu müssen, eine der Spuren auch als sogenannte "Referenzspur" benutzt werden kann. Mit einer solchen Spur können mögliche Fehler in der absoluten Winkellageerfassung kompensiert werden, welche insbesondere auf alterungs- bzw. verschmutzungsbedingte Veränderungen in der Lichtdurchlässigkeit bzw. Reflexionsfähigkeit der Geberscheibe zurückzuführen sind.

Es ist ein weiterer Vorteil des erfindungsgemäßen Absolutlagegebers, daß zusätzlich zur absoluten Winkellage der Geberscheibe im Stillstand und zur relativen Winkellage der Geberscheibe bei Drehung mittels Inkrementzählung auch die Zahl der vollen Umdrehungen der Geberscheibe erfaßt werden kann. Hierzu werden sogenannte "Wiegand-Sensoren" verwendet, welche unabhängig von einer Versorgungsspannung Spannungsimpulse liefern, deren Amplitude im Vergleich zu der von einem Induktivgeber bereitgestellten Amplitude unabhängig von der Relativgeschwindigkeit zwischen dem feststehenden und dem bewegten Teil des Meßsystems ist. Dem "Siemens-Forschungs- und Entwicklungs-Bericht", Band 15 (1986), Nr. 3, Seite 135-144 und der deutschen Patentanmeldung mit dem amtlichen Aktenzeichen P 35 44 452.5 sind weitere Einzelheiten zur Funktion und zum Aufbau von "Wiegand-Sensoren" zu entnehmen. Desweiteren enthält die deutsche Patentanmeldung mit dem amtlichen Aktenzeichen P 36 44 043.4 eine vorteilhafte Anordnung von mindestens einem Wiegand-Sensor in einem Winkellagegeber.

Es ist ein weiterer Vorteil der vorliegenden Erfindung, daß gemäß weiteren Ausgestaltungen die Genauigkeit der Absolutlageerfassung weiter erhöht werden kann. Zu diesem Zweck stellt die im erfindungsgemäßen Winkellagegeber zur Abtastung des durch die jeweilige Spur hindurchtretenden bzw. davon reflektierten Lichtes vorgesehene Erfassungseinheit für jede der Spuren Zusatzmeßsignale zur Verfügung, welche um eine viertel bzw. eine halbe Periode gegenüber dem eigentlichen Meßsignal der jeweiligen Spur phasenverschoben sind. So kann zum einen für die absolute Lagebestimmung im Stillstand der Geberscheibe die Differenz aus dem Meßsignal und dem um ein halbe Periode phasenverschobenen Zusatzmeßsignal verwendet werden. Das so gebildete Differenzsignal hat im Vergleich zum eigentlichen Meßsignal der jeweiligen Spur ein erheblich niedrigeres Signalrauschen, so daß die zum jeweiligen Momentanwert dieses Signales gehörige absolute Winkellage von der Auswerteeinheit mit einer größeren Genauigkeit bestimmt werden kann. Desweiteren kann die Auswerteeinheit von der Auswertung des eigentlichen Meßsignals der jeweiligen Spur auf die Auswertung des dazugehörigen, um eine viertel Periode phasenverschobenen Zusatzmeßsignals umgeschaltet werden, wenn der Momentanwert des Meßsignals gerade an der oberen bzw. unteren Grenze des Meßsignalbereiches liegt. Hierdurch können Meßfehler ausgeglichen werden, welche verstärkt auftreten, wenn der Momentanwert des jeweiligen Meßsignales an einer der Grenzen des Meßsignalbereiches liegt.

Anhand der nachfolgend kurz angeführten Figuren wird die Erfindung desweiteren näher erläutert. Dabei zeigt

FIG 1      schematisch den möglichen inneren Aufbau eines Winkellagegebers gemäß der vorliegenden Erfindung im Schnitt,

FIG 2      beispielhaft eine nach der vorliegenden Erfindung gestaltete Geberscheibe,

FIG 3      ein Segment der Geberscheibe von FIG 2 im Detail, und die gemäß einer möglichen Ausführungsform für jede der Spuren der Geberscheibe vorgesehenen Meßfenster einer Erfassungseinheit,

FIG 4      elektrische Meßsignale für die Spuren einer Geberscheibe gemäß der Ausführungsform von FIG 2 bzw. 3,

FIG 5      das Meßsignal, das um eine halbe Periode phasenverschobe Zusatzmeßsignal und das aus beiden Signalen zur Erhöhung der Auflösegenauigkeit gebildete Differenzsignal für eine der Spuren der Geberscheibe von FIG 2,

FIG 6      das elektrische Meßsignal und das zur absoluten Lagebestimmung dienende, um eine viertel Periode phasenverschobene Zusatzmeßsignal für eine der Spuren der Geberscheibe von FIG 2,

FIG 7    die zum Zwecke der Erhöhung der Auflösegenauigkeit dienende Umschaltung zwischen einem elektrischen Meßsignal und dem dazugehörigen, um eine viertel Periode phasenverschobenen Zusatzmeßsignal für eine der Spuren der Geberscheibe von FIG 2,

FIG 8    eine vorteilhafte Anordnung von Wiegand-Sensoren zur Drehrichtungserfassung und zur Zählung von ganzen Umdrehungen,

FIG 9    eine vorteilhafte Ausführungsform einer Erfassungseinheit für das durch die Spuren der Geberscheibe von FIG 2 hindurchtretende bzw. davon reflektierte Licht, und

FIG 10   eine vorteilhafte Ausführungsform einer Auswerteeinheit zur Bestimmung der absoluten Winkellage der Geberscheibe von FIG 2 aus den von der Erfassungseinheit der FIG 9 ermittelten elektrischen Meßsignalen der einzelnen Spuren.

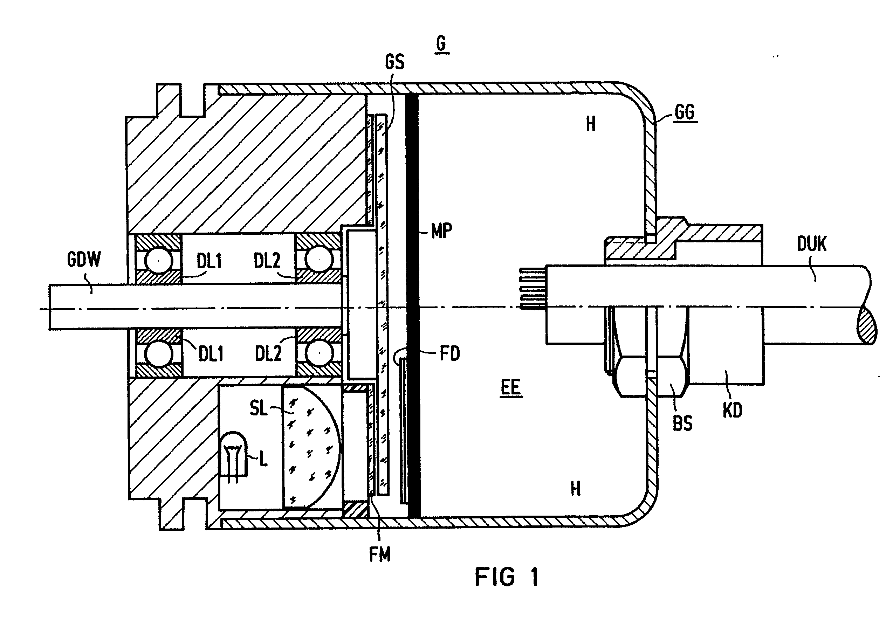

In der Schnittdarstellung von FIG 1 ist ein vorteilhafter mechanischer Innenaufbau eines Winkellagegebers gemäß der vorliegenden Erfindung schematisch dargestellt. Die Geberdrehwelle GDW, welche mit der in ihrer absoluten Winkellage zu überwachenden drehbaren Achse einer Maschine verbunden ist, ist im Gehäuse GG des Gebers vorteilhaft mit Hilfe zweier Drehwellenlager DL1 und DL2 gelagert. An deren einem Ende ist die drehbare Geberscheibe GS mit den ringförmigen, konzentrischen und fotoelektrisch abtastbaren Spuren angebracht. Zur Beleuchtung der Spuren dient in dem Ausführungsbeispiel der FIG 1 eine einzige Lichtquelle L, welche bevorzugt über eine Streulinse SL die Spuren möglichst homogen beleuchtet. Ein zusätzliches, zwischen der Streulinse und der drehbaren Geberscheibe angeordnetes Meßfenstermodul FM enthält pro Spur mindestens ein Meßfenster, mit deren Hilfe eine genau definierte Beleuchtung einer jeden Spur der Geberscheibe möglich ist. Da die fotoelektrische Abtastung der Spuren der Geberscheibe GS im Ausführungsbeispiel der FIG 1 nach dem sogenannten Durchlichtverfahren erfolgt, ist auf der der Lichtquelle L gegenüberliegenden Seite der Geberscheibe GS ortsfest ein Träger FD für die Lichtdetektoren bevorzugt auf einer Montageplatte MP angeordnet. Als Lichtdetektoren werden bevorzugt Fotodioden verwendet, von denen mindestens eine einem jeden Meßfenster im Meßfenstermodul FM zugeordnet ist. Gemäß der vorliegenden Erfindung werden die von den Lichtdetektoren gebildeten Signale einer Erfassungseinheit EE zur Bildung der elektrischen Meßsignale der einzelnen Spuren zugeführt. Diese ist bevorzugt im Hohlraum H im rechten Teil des Gebergehäuses GG untergebracht und zur besseren Übersicht in der FIG 1 nicht dargestellt. Die von der Erfassungseinheit EE gebildeten elektrischen Meßsignale werden gemäß der vorliegenden Erfindung desweiteren einer Auswerteeinheit zur Bestimmung der aktuellen absoluten Winkellage der Geberdrehwelle GDW und damit der zu überwachenden drehbaren Achse der jeweilige Maschine zugeführt. Es ist besonders vorteilhaft, wenn die Auswerteeinheit nicht im Gebergehäuse GG selbst untergebracht ist. Hierdurch können die äußeren Abmessungen des Gehäuses GG des erfindungsgemäßen Winkellagegebers weiter reduziert werden. Zur Übertragung der elektrischen Meßsignale der einzelnen Spuren von der Erfassungseinheit EE bis zur Auswerteeinheit dient bevorzugt ein Datenübertragungskabel DUK, welches gemäß der in der FIG 1 dargestellten Ausführungsform über eine Kabeldurchführung KD und eine dazugehörige Befestigungsschraube BS in das Gebergehäuse GG eingeführt ist.

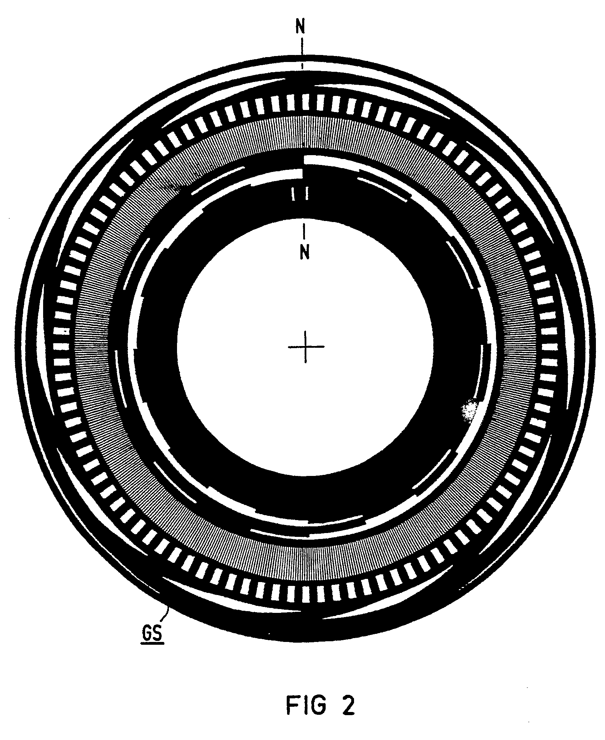

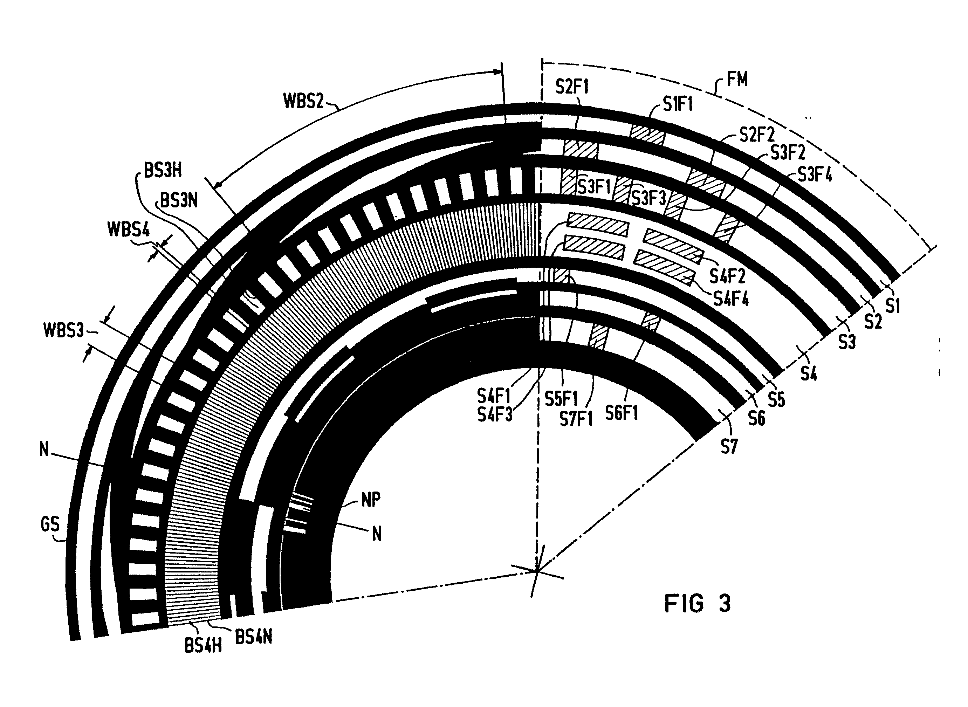

Die FIG 2 zeigt eine Draufsicht auf eine vorteilhafte Ausführungsform einer Geberscheibe GS gemäß der vorliegenden Erfindung. Dabei sind in Spuren angeordnete Bereiche mit hoher und niedriger Lichtdurchlässigkeit bzw. Reflexionsfähigkeit vorhanden, mit deren Hilfe die absolute Lage der Geberscheibe bezogen auf die als Winkelnullpunkt dienende Referenzlage N bei Stillstand der Geberscheibe mit einer sehr hohen Genauigkeit bestimmt werden kann. Die Erfindung wird desweiteren am Beispiel dieser konkreten Ausführungsform einer Geberscheibe mit Hilfe der nachfolgenden Figuren 3 bis 10 näher erläutert.

Dabei zeigt FIG 3 ein Segment der Geberscheibe GS von FIG 2 im Detail. Man erkennt, daß in diesem Beispiel sieben konzentrisch angeordnete, fotoelektrisch abtastbare Spuren S1 bis S7 auf der Scheibe vorhanden sind. Dabei ist in dem mit FM markierten Segment der FIG 3 nur der jeweils von jeder Spur eingenommene, ringförmige Flächenbereich unter Weglassung der spurindividuellen Oberflächenstruktur dargestellt. Von diesen Spuren bilden die Spuren S1 bis S4 eine Gruppe, bei der die dazugehörigen von der Erfassungseinheit EE gebildeten, elektrischen Meßsignale annähernd dreieckförmige Funktionen des Drehwinkels sind. Desweiteren sind die Oberflächen dieser Spuren in ihrer Lichtdurchlässigkeit bzw. Reflexionsfähigkeit so gestaltet, daß die bei einer vollen Umdrehung der Geberscheibe bei jedem der Meßsignale auftretende Anzahl ganzer Perioden im Vergleich der Spuren untereinander abgestuft sind. Bei dem zur Darstellung der Erfindung dienenden Ausführungsbeispiel gemäß der FIG 2 wurde für diese Abstufung jeweils das Verhältnis 1 : 10 gewählt. So durchläuft das zur sogenannten "360°-Spur" S1 gehörige dreieckförmige Meßsignal bei einer vollen Umdrehung der Geberscheibe eine ganze Periode, was insbesondere der Darstellung von FIG 2 zu entnehmen ist. Dort erreicht die Lichtdurchlässigkeit bzw. Reflexionsfähigkeit dieser äußeren Spur S1 bei einer der Referenzlage N entsprechenden Lage der Geberscheibe gerade ihr Maximum, bzw. nach einer Drehung um 180° gerade ihr Minimum. Der zu einer Periode des elektrischen Meßsignals dieser Spur gehörige Winkelbereich WBS1 entspricht somit genau 360°.

Demgegenüber ist die bei einer vollen Umdrehung der Geberscheibe im Meßsignal der Spur S2 auftretende Anzahl von ganzen Perioden gerade um den Faktor 10 größer. In der FIG 3 ist der von einer solchen Periode des zur Spur S2 gehörigen Meßsignales eingenommene, 36° große Winkelbereich WBS2 dargestellt. In entsprechender Weise sind die bei Drehung der Geberscheibe um den Winkelbereich WBS2 = 36° in den Meßsignalen der Spuren S3 und S4 auftretenden Periodenanzahlen abgestuft. So ist der zur Periode des Meßsignals der Spur S3 gehörige Winkelbereich WBS3 wiederum um den Faktor 10 kleiner als der Winkelbereich WBS2. Bei einer Drehung der Geberscheibe um den Winkelbereich WBS2 treten somit ebenfalls zehn ganze Perioden im Meßsignal der Spur U3 auf. Bezogen auf die äußere Spur S1 können somit die Spuren S2 bzw. S3 als sogenannte "36°-Spur" bzw. "3,6°-Spur" bezeichnet werden. Es ist besonders vorteilhaft, wenn schließlich auch bei Drehung der Geberscheibe um den Winkelbereich WBS3 = 3,6° die Periodenanzahl im elektrischen Meßsignal der Spur S4 gerade den Wert 10 hat. Die Spur S4 kann dann als sogenannte "0,36°-Spur" bezeichnet werden. Der FIG 3 ist der zu einer Periode des dazugehörigen Meßsignals gehörige Winkelbereich WBS4 = 0,36° ebenfalls eingetragen. Gemäß der vorliegenden Erfindung kann die Abstufung der Periodensummen der einzelnen Spuren der Gruppe untereinander auch in anderem Verhältnis gestaffelt werden. Insbesondere kann der Verhältniswert der im betrachteten Beispiel als höchstauflösende Spur dienenden Spur S4 im Vergleich zur benachbarten Spur S3 auch erheblich größer gewählt werden. Erfolgt z.B. die Abstufung der Periodensummen der Spuren S1 bis S4 im Verhältnis 1 : 10 : 10 : 40, so treten bei einer vollen Umdrehung der Geberscheibe 4000 ganze Perioden im Meßsignal der Spur S4 auf.

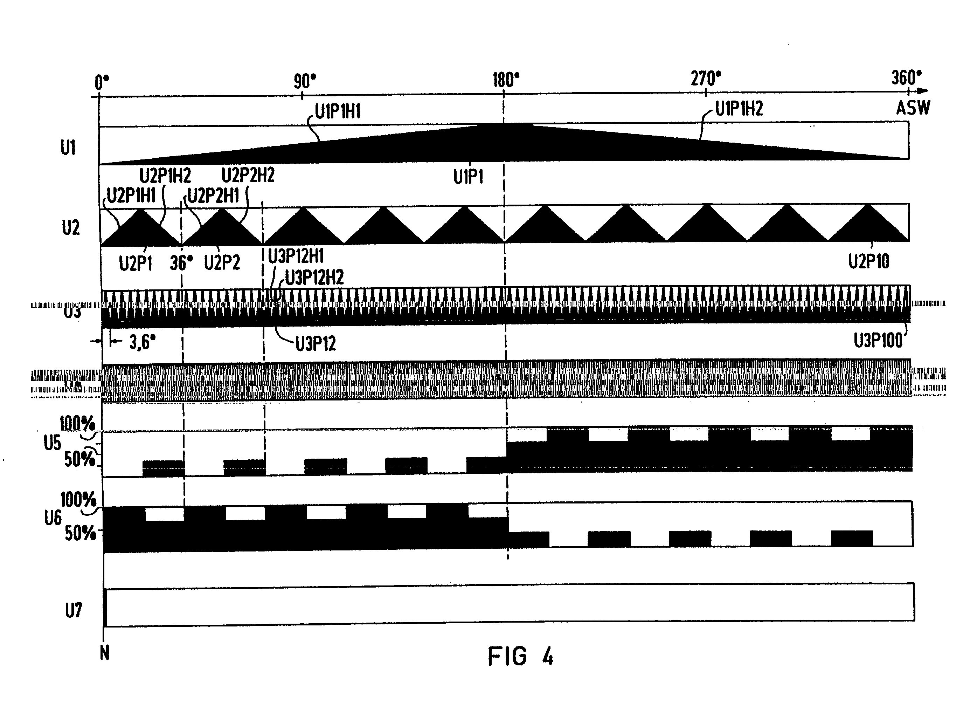

In der FIG 4 sind die bei einer vollen Umdrehung (360°) der Geberscheibe von FIG 2 für jede der Spuren S1 bis S7 auftretenden elektrischen Meßsignale U1 bis U7 dargestellt. Dabei markiert der Spannungsimpuls U7 den Winkelnullpunkt in der Referenzlage N. In der Ausführungsform der FIG 3 wird diese Referenzlage N mit Hilfe eines sogenannten kodierten Nullimpulses NP auf der Spur S7 festgelegt. Wie aus der Darstellung der FIG 4 zu entnehmen ist, sind die elektrischen Meßsignale U1 bis U4 der Gruppe von Spuren S1 bis S4 dreieckförmig, wobei aus Gründen der beschränkten Zeichengenauigkeit die "Dreiecke" des elektrischen Meßsignales U4 der Einfachheit halber als Striche dargestellt sind. Man erkennt, daß bei einer vollen Umdrehung der Geberscheibe GS das elektrische Meßsignal U1 der Spur S1 eine einzige Dreiecksperiode U1P1 durchläuft. Entsprechend der bereits beschriebenen Abstufung der Periodensummen treten innerhalb dieser Periode U1P1 zehn Perioden U2P1 bis U2P10 im elektrischen Meßsignal U2 der Spur S2 auf. Ein solche Periode umfaßt somit einen Winkelbereich WBS2 von 36°. Im vorliegenden Ausführungsbeispiel sind die Periodensumme des Meßsignals U3 der Spur S3 im Vergleich zum Meßsignal U2 und die Periodensumme des Meßsignals U4 der Spur S4 im Vergleich zum Meßsignal U3 ebenfalls untereinander um den Faktor 10 abgestuft. Somit treten bei einer Drehung der Geberscheibe um den Winkelbereich WBS2, welcher einer Periode des Meßsignales U2 entspricht, zehn Perioden im Meßsignal U3 auf. Dementsprechend treten 100 Perioden U3P1 bis U3P100 im Meßsignal U3 bzw. 1000 Perioden U4P1 bis U4P1000 im Meßsignal U4 bei einer vollen Umdrehung der Geberscheibe auf.

Zur Bestimmung der aktuellen, absoluten Winkellage ASW der Geberscheibe tastet die Erfassungseinheit EE die Momentanwerte insbesondere der elektrischen Meßsignale U1 bis U4 der Gruppe von Spuren S1 bis S4 ab. Die Auswerteeinheit bestimmt zunächst aus dem Momentanwert von U1 die dazugehörige absolute Winkellage ASW. Dieser Wert ist aber noch mit einer relativ großen Meßungenauigkeit behaftet, da das Meßsignal von U1 relativ zum Drehwinkel nur eine sehr geringe Steigung hat. Zur Verfeinerung des durch Auswertung von U1 zunächst nur grob bestimmten Winkellagewertes wird durch die Auswerteeinheit nun diejenige aus den zehn Perioden von U2 identifiziert, welche dem grob bestimmten Winkellagewert zugeordnet werden kann. Zur Verfeinerung des Winkellagemeßwertes wird in einem nächsten Schritt der Momentanwert dieser identifizierten Periode von U2 durch die Auswerteeinheit ausgewertet. Auf diese Weise kann die Genauigkeit des Meßwertes weiter erhöht werden, da eine Periode des Meßsignales von U2 nur ein Zehntel des von einer Periode des Meßsignales von U1 eingenommenen Winkelbereich umfaßt und somit das Meßsignal von U2 relativ zum Drehwinkel eine erheblich größere Steigung hat. Soll der Winkellagemeßwert weiter verfeinert werden, so wird analog zu der eben beschriebenen Vorgehensweise diejenige aus den zehn innerhalb der identifizierten Periode von U2 liegenden Perioden von U3 identifiziert, welcher der aufgrund der Auswertung von U2 bereits verfeinerte Meßwert zugeordnet werden kann. Durch die Auswertung des Momentanwertes dieser Periode von U3 kann die Meßungenauigkeit weiter reduziert werden, da die Steigung U3 relativ zum Drehwinkel wiederum um den Faktor 10 größer ist als die Steigung von U2. Soll der Winkellagemeßwert mit höchster Genauigkeit ermittelt werden, so wird schließlich noch die im vorliegenden Beispiel als höchstauflösende Spur dienende Spur S4 in der eben beschriebenen Weise ausgewertet.

Man erkennt, daß die gewünschte Genauigkeit in der Bestimmung der absoluten Winkellage zum einen von der Anzahl der analog auswertbaren Spuren abhängig ist. Zum anderen wird sie aber auch durch die erfindungsgemäße Abstufung der Periodensummen der Meßsignale der einzelnen Spuren bestimmt. Um die zur Erreichung einer bestimmten Meßgenauigkeit notwendige Anzahl von Spuren auf der Geberscheibe möglichst klein zu halten, ist die Anzahl der während einer Periode eines Meßsignales, z.B. U1, im Meßsignal der benachbarten Spur mit der nächst höheren Periodensumme, im Beispiel also U2, auftretende Periodensumme möglichst groß zu wählen. Auf diese Weise ist bei der sukzessiven Auswertung der Meßsignale der gestuften Spuren eine sehr schnelle Verfeinerung des Meßwertes zu erreichen. Eine obere Grenze für die Periodensumme einer Spur, z.B. U2, wird aber dadurch gegeben, daß insbesondere abhängig vom konkreten Durchmesser der Geberscheibe und von der radialen Lage der Spur auf der Geberscheibe eine Periode dieser Spur aufgrund der Auswertung der benachbarten Spur mit der nächst kleineren Periodensumme, im Beispiel also U1, noch sicher identifiziert werden kann. Der von einer Periode der Spur eingenommene Winkelbereich, z.B. WBS2 bei S2, muß folglich größer sein als die Meßungenauigkeit des durch Auswertung der benachbarten Spur, im Beispiel also U1, gewonnenen Winkellagemeßwertes.

Die eindeutige Bestimmung der absoluten Winkellage der Geberscheibe ist mit der oben beschriebenen Auswertung der Momentanwerte der elektrischen Meßsignale der Spuren S1 bis S4 durch die Auswerteeinheit allein noch nicht möglich. Vielmehr werden noch Mittel benötigt, mit deren Hilfe der Momentanwert eines Meßsignales der linken bzw. rechten Hälfte der dazugehörigen, identifizierten Periode der jeweiligen Spur zugeordnet werden kann. So kann entsprechend der Darstellung von FIG 4 z.B. nach Auswertung des elektrischen Meßsignales U1 der gefundene Momentanwert der linken bzw. rechten Periodenhälfte U1P1H1 bzw. U1P1H2 zugeordnet werden. Die dazugehörige absolute Winkellage ist also noch nicht eindeutig bestimmt, sondern kann entweder im Winkelbereich zwischen 0° und 180° bzw. im Winkelbereich zwischen 180° und 360° liegen. Die gleiche Problematik ergibt sich auch bei Auswertung der elektrischen Meßsignale U2 bis U4 der Spuren S2 bis S4. Wurde z.B. nach Auswertung des Momentanwertes von U1 die zweite Periode U2P2 des Meßsignals U2 als die zur aktuellen Winkellage des Drehgebers gehörige Periode auf der Spur S2 identifiziert, so kann auch hier der abgetastete Momentanwert von U2 der ersten bzw. zweiten Hälfte U2P2H1 bzw. U2P2H2 zugeordnet werden. Dementsprechend kann die dazugehörige tatsächliche Winkellage des Drehgebers entweder im Bereich zwischen 36° und 54° oder zwischen 54° und 72° liegen.

In einer möglichen Ausführungsform dient eine zusätzliche, als sogenannte "Koordinationsspur" bezeichnete Spur S5 auf der Geberscheibe von FIG 2 bzw. FIG 3 als das Mittel zur Bestimmung der zu einem Momentanwert eines Meßsignales gehörigen Periodenhälfte. Diese Spur verfügt über stufig unterschiedliche Werte der Lichtdurchlässigkeit bzw. Reflexionsfähigkeit. Dabei ist in dem in der FIG 4 dargestellten Beispiel einer jeden Hälfte der Perioden der Meßsignale U1 bzw. U2 ein unterschiedlicher Stufenwert zugeordnet. So ist z.B. ein Momentanwert von U1 der ersten Periodenhälfte U1P1H1 zuzuordnen, wenn gleichzeitig das Meßsignal U5 von S5 einen Wert von annähernd 0 bzw. 25 % des Meßsignalbereiches hat. Dementsprechend ist z.B. ein Momentanwert von U2 jeweils der rechten Hälfte einer der zehn Perioden dieses Meßsignales zuzuordnen, wenn das Meßsignal U5 entweder einen Wert von ca. 25 bzw. ca. 100 % aufweist. Bevozugt mit Hilfe einer weiteren, aber mit erheblich enger aufeinanderfolgenden Bereichen unterschiedlicher Stufenhöhe versehenen Koordinationsspur bzw. mittels einer Erhöhung der Stufenanzahl der Spur S5 ist es prinzipiell auf die gleiche Weise möglich auch die entsprechenden Periodenhälften in den Meßsignalen U3 und U4 auszuwählen.

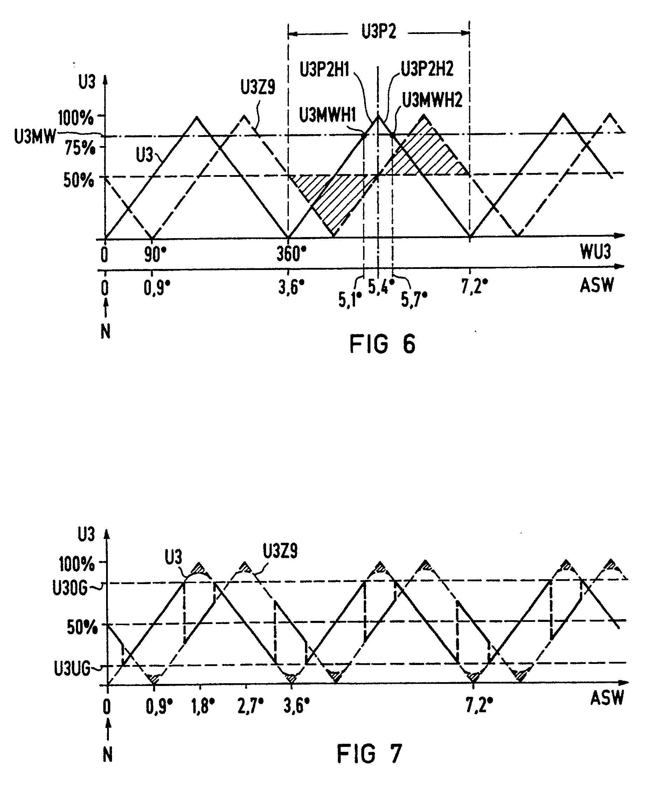

In der FIG 6 ist eine weitere Möglichkeit dargestellt, um die einem Momentanwert zuzuordnende Hälfte der Perioden des jeweiligen Meßsignals zu bestimmen. Dabei sei angenommen, daß durch Auswertung der Meßsignale der Spuren U1 und U2 die zweite Periode U3P2 des Meßsignales U3 als diejenige Periode identifiziert wurde, in welcher die insbesondere durch Auswertung des Meßsignals U3 mit noch größerer Genauigkeit zu bestimmende aktuelle absolute Winkellage ASW der Geberscheibe zu suchen ist. Aufgrund der Auswertung der Meßsignale von U1 und U2 wurde die absolute Winkellage ASW der Geberscheibe folglich bereits so genau bestimmt, daß diese in dem von der zweiten Periode U3P2 des Meßsignals U3 eingenommenen Winkelbereich zwischen 3,6° und 7,2° liegen muß. Nach Auswertung des Momentanwertes U3MW dieser Spur S3, welcher im Beispiel der FIG 6 einen Wert von ca. 80 % des Meßbereiches hat, kann dieser dem Punkt U3MWH1 mit dem Winkelwert von ca. 5,1° in der ersten Periodenhälfte U3P2H1 bzw. gleichzeitig dem Punkt U3MWH2 mit dem Winkelwert von ca. 5,7° in der zweiten Periodenhälfte U3P2H2 zugeordnet werden. Zur Beseitigung dieser Zweideutigkeit wird von der Auswerteeinheit erfindungsgemäß ein dreieckförmiges Zusatzmeßsignal U3Z9 ausgewertet, welches von der Erfassungseinheit EE zusätzlich bereitgestellt wird und gegenüber dem eigentlichen Meßsignal U3 eine Phasenverschiebung von einer viertel Periode (90°) hat. Das in der FIG 6 beispielhaft eingetragene Zusatzmeßsignal U3Z9 eilt dabei dem Meßsignal U3 in der Phase nach. Hat in diesem Fall das Zusatzmeßsignal einen Wert, der im unteren Meßbereich zwischen 0 % und 50 % liegt, so ist der Momentanwert U3MW der ersten Periodenhälfte U3P2H1, und damit dem absoluten Winkelwert von ca. 5,1° zuzuordnen. Hat das Zusatzmeßsignal U3Z9 allerdings einen Wert, der im oberen Meßsignalbereich zwischen 50 % und 100 % liegt, so ist der Momentanwert U3MW dem Punkt U3MWH2 auf der zweiten Periodenhälfte U3P2H2, und damit dem absoluten Lagewinkel von ca. 5,7° zuzuordnen.

Die in der FIG 6 dargestellte Möglichkeit der Zuordnung des Momentanwertes eines Meßsignals zur ersten bzw. zweiten Hälfte einer der Perioden dieses Meßsignals kann bevorzugt bei Spuren verwendet werden, bei denen der zu einer Periode des Meßsignales gehörige Winkelbereich klein ist. In der FIG 4 sind dies bevorzugt die Meßsignale U3, U4 der Spulen S3, S4. Prinzipiell kann aber auch die Bestimmung der jeweiligen Periodenhälften bei den Spuren U1 und U2 mit Hilfe des in der FIG 6 dargestellten Prinzips durchgeführt werden. In diesem Fall kann auf die Koordinationsspur U5 gänzlich verzichtet werden. Die hochgenaue und eindeutige Bestimmung der absoluten Winkellager der Geberscheibe ist in dem hier zugrunde gelegten Ausführungsbeispiel dann bereits mit Hilfe der vier Spuren S1 bis S4 der Geberscheibe von FIG 2 möglich.

Anhand der FIG 7 wird desweiteren erläutert, wie das Vorhandensein eines um eine viertel Periode phasenverschobenen Zusatzmeßsignales zu jedem Meßsignal einer jeden Spur besonders vorteilhaft zur weiteren Erhöhung der Auflösegenauigkeit des erfindungsgemäßen Winkellagegebers benutzt werden kann. Aufgrund von unvermeidlichen Fertigungsungenauigkeiten der Geberscheibe wird das dreieckförmige Meßsignal einer jeden Spur bei Momentanwerten, die an der Grenze des Meßsignalbereiches liegen, vom gewünschten idealen dreieckförmigen Verlauf abweichen. In der FIG 7 ist dies am Beispiel des Meßsignales U3 und des um eine viertel Periode phasenverschobenen Zusatzmeßsignales U3Z9 durch Schraffuren in den jeweiligen Dreiecksspitzen dargestellt. Um dennoch die Auswertung des Meßsignales einer jeden Spur mit über dem Drehwinkel gleichmäßig hoher Genauigkeit sicherzustellen, wird von der Auswerteeinheit zur Bestimmung der absoluten Winkellage dann das Zusatzmeßsignal ausgewertet, wenn der Momentanwert des jeweiligen Meßsignales einen oberen bzw. unteren Grenzwert über-bzw. unterschritten hat. In dem in der FIG 7 dargestellten Beispiel ist je ein solcher Grenzwert U3OG bzw. U3UG für das Meßsignales U3 der Spur S3 dargestellt. Überschreitet dabei z.B. der Momentanwert von U3 den oberen Grenzwert U3OG bei einem absoluten Lagewinkel ASW von ca. 1,5°, so wird ab diesem Winkel das dreieckförmige Zusatzmeßsignal U3Z9 ausgewertet. Erst nach Unterschreitung des oberen Grenzwertes U3OG durch das Meßsignal U3 bei einem absoluten Lagewinkel von ca. 2,1° wird wieder auf die Auswertung des eigentlichen Meßsignales zurückgeschaltet. Auf diese Weise werden besonders vorteilhaft die mit einem großen Meßfehler behafteten "Dreiecksspitzen" des Meßsignales bzw. Zusatzmeßsignales ausgeblendet.

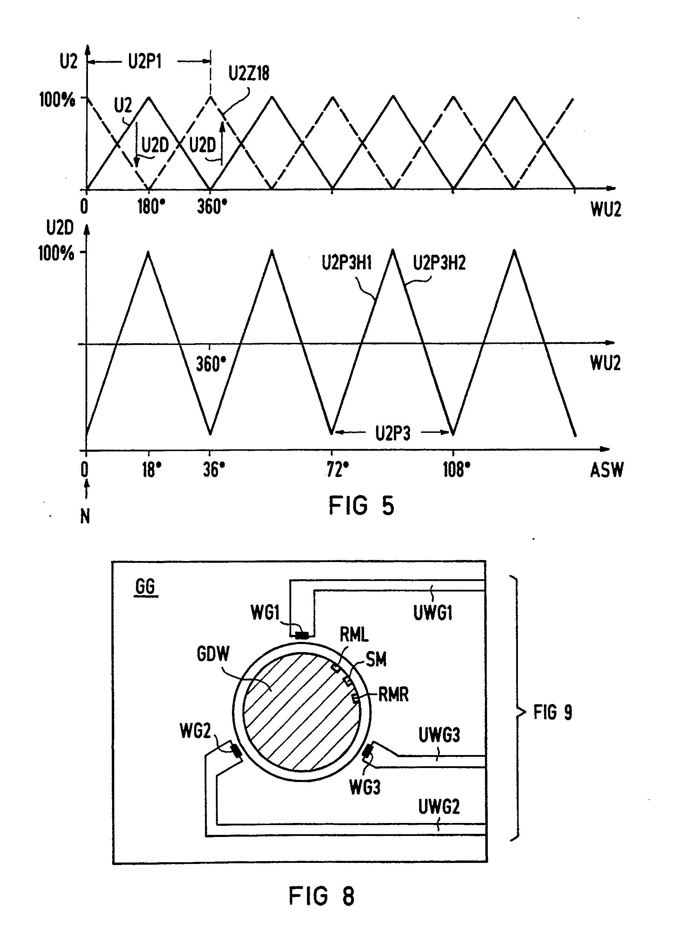

In der FIG 5 ist am Beispiel des Meßsignales U2 der Spur S2 eine weitere Möglichkeit dargestellt, die Genauigkeit der Erfassung des absoluten Lagewinkels ASW bei dem erfindungsgemäßen Winkellagegeber zu vergrößern. Hierzu wird erfindungsgemäß von der Erfassungseinheit EE ein weiteres, um eine halbe Periode gegenüber dem Meßsignal U2 phasenverschobenes Zusatzmeßsignal U2Z18 bereitgestellt. Der Auswerteeinheit wird nun zur Bestimmung der absoluten Winkellage nicht das Meßsignal U2, sondern die Differenz U2D aus dem Meßsignal U2 und dem dazugehörigen gegenphasigen Meßsignal U2Z18 zugeführt. Aufgrund dieser Subtraktion zeichnet sich das Differenzsignal U2D durch ein gegenüber dem eigentlichen Meßsignal U2 erheblich verringertes Signalrauschen und einen doppelt so hohen Signalpegel aus.

Es ist besonders vorteilhaft, wenn diese Rauschreduzierung durch Bildung der Differenz aus dem Meßsignal und einem dazugehörigen gegenphasigen Meßsignal nicht nur bei den analog auszuwertenden Spuren S1 bis S4 durchgeführt wird, sondern auch bei der in der FIG 4 dargestellten Koordinationsspur U5. Hierzu ist allerdings eine weitere, zu U5 gegenphasige Koordinationsspur U6 auf der Geberscheibe notwendig. Eine solche Spur ist bereits auf der Geberscheibe von FIG 2 bzw. 3, und deren Meßsignal U6 bereits in der FIG 4 dargestellt.

Eine vorteilhafte weitere Ausgestaltung eines Teiles der Erfassungseinheit EE ist in dem mit FM bezeichneten Segment der Geberscheibe GS in der FIG 3 dargestellt. Jeder der Spuren ist dabei mindestens ein Meßfenster eines zwischen der Lichtquelle und der Geberscheibe angeordneten Meßfenstermodules zugeordnet. Jedes Meßfenster ermöglicht dabei eine genau definierte Beleuchtung der jeweiligen Spur. Der FIG 3 ist desweiteren zu entnehmen, daß bei einigen Spuren mehrere Meßfenster zur Abtastung der selben Spur vorhanden sind. So sind z.B. der Spur S2 die beiden Meßfenster S2F1 und S2F2 zugeordnet und auf der Geberscheibe bevorzugt in einem solchen Abstand voneinander angeordnet, daß von der Erfassungseinheit EE das dreieckförmige Meßsignal U2 z.B. mit Hilfe des Meßfensters S2F1 und das dreieckförmige, um eine halbe Periode phasenverschobene Zusatzmeßsignal U2Z18 mit Hilfe des Meßfensters S2F2 erzeugt wird. Beide Signale können in der bereits beschriebenen Weise von der Auswerteeinheit zum rauscharmen Differenzsignal U2D verarbeitet werden. In entsprechender Weise wird das Meßsignal U3 bzw. das Zusatzmeßsignal U3Z18 der Spur S3 mit Hilfe der Meßfenster S3F1 bzw. S3F2 erzeugt. Schließlich dienen auch die beiden Meßfenster S4F1 und S4F2 zur Erzeugung des Meßsignals U4 bzw. des gegenphasigen Zusatzmeßsignales U4Z18. Wie bereits oben ausgeführt wurde, wird zur Erzeugung eines rauscharmen Differenzsignals zum Meßsignal U5 der Koordinationsspur eine zusätzliche, gegenphasige Koordinationsspur S6 benötigt. Das dazugehörige, mit Hilfe des Meßfensters S6F1 erzeugte Meßsignal U6 verläuft gegenphasig zum Meßsignal U5 und ist somit zur Bildung des Differenzsignals U5D der Koordinationsspur S5 geeignet. Schließlich dient das Meßfenster S7F1 auf der Spur S7 zur Erzeugung des impulsartigen Meßsignales U7, wenn die aktuelle Lage der Geberscheibe mit der Referenzlage N übereinstimmt. Schließlich ist es vorteilhaft, wenn auch zum Meßsignal U1 der Spur S1 ein gegenphasiges Zusatzmeßsignal U1Z18 zur Bildung des rauscharmen Differenzmeßsignals U1D bereitgestellt wird. Hierfür ist zusätzlich zum Meßfenster S1F1 auf der Spur S1 ein weiteres, diagonal gegenüberliegend auf der Geberscheibe angeordnetes Meßfenster S1F2 notwendig, welches aus Gründen der Übersichtlichkeit in der FIG 3 nicht dargestellt werden kann. Dem dortigen Ausführungsbeispiel ist desweiteren zu entnehmen, daß im Meßfenstermodul FM speziell für die Spuren S3 bzw. S4 je zwei weitere Meßfenster S3F3 und S3F4 bzw. S4F3 und S4F4 vorgesehen sind. Diese dienen zur Erzeugung des um eine viertel Periode phasenverschobenen Zusatzmeßsignales U3Z9 bzw. U4Z9, und der dazugehörigen, ebenfalls zur Bildung von rauscharmen Differenzsignale U3Z9D bzw. U4Z9D notwendigen gegenphasigen Zusatzmeßsignale U3Z27 bzw. U4Z27.

Gemäß der vorliegenden Erfindung ist die Lichtdurchlässigkeit bzw. Reflexionsfähigkeit der zur Bestimmung des hochgenauen absolutenWinkellagemeßwertes dienenden Spuren so gestaltet, daß die dazugehörigen Meßsignale dreieckförmige Funktionen des Drehwinkels sind. Im Beispiel der Geberscheibe der FIG 2 bzw. 3 betrifft dies die Gruppe der Spuren S1 bis S4. Aus der FIG 3 ist zu entnehmen, daß die zu den Spuren S1 bzw. S2 gehörigen Oberflächenmuster auf der Geberscheibe sich prinzipell von den Oberflächenmustern der Spuren S3 und S4 unterscheiden. Bei den Spuren S1 und S2 verändert sich die Lichtdurchlässigkeit bzw. Reflexionsfähigkeit der Geberoberfläche pro Periode des dazugehörigen Meßsignals U1 und U2 im Spurquerschnitt gesehen so, daß diese kontinuierlich und periodisch bis zu einem Maximalwert zu und anschließend bis zu einem Minimalwert abnimmt. Diese spezielle Art der Oberflächengestaltung der Geberscheibe bei diesen Spuren wird dadurch bedingt, daß der die Breite der Meßfenster S1F1, S2F1 und S2F2 dieser Spuren bestimmende Winkelbereich klein ist gegenüber dem von einer Periode der dazugehörigen Meßsignale U1 bzw. U2 eingenommene Winkelbereich WBS1 bzw. WBS2. Bevorzugt mit einer in der dargestellten Weise über den Spurquerschnitt gesehenen kontinuierlich zu- und abnehmenden Lichtdurchlässigkeit bzw. Reflexionsfähigkeit der Geberscheibe läßt sich ein annähernd dreieckförmiges Meßsignal U1 bzw. U2 mit der vorgegebenen Größe dieser Meßfenster erreichen.

Bei den Spuren S3 und S4 dagegen ist die pro Winkelbereich auftretende Anzahl an Perioden in den jeweiligen Meßsignalen U3 und U4 erheblich größer als bei den Meßsignalen U1 und U2. Aus diesem Grund kann die Breite der dazugehörigen Meßfenster, z.B. des Meßfensters S3F1 auf der Spur S3 bzw. des Meßfensters S4F1 auf der Spur S4 gerade so groß gewählt werden, daß der dazugehörige Winkelbereich WBS3 bzw. WBS4 gerade der halben Periode des dazugehörigen Meßsignals U3 bzw. U4, bzw. einem ungeradzahligen Vielfachen davon entspricht. So entspricht im Beispiel der FIG 3 der die Breite des Meßfensters S3F1 bestimmte Winkelwert gerade der Hälfte des von einer Periode des Meßsignals U3 eingenommenen Winkelbereiches WBS3. Aus diesem Grund ist zur Erzeugung eines dreieckförmigen Meßsignals U3 die Oberfläche der Spur S3 bevorzugt so gewählt, daß diese äquidistante, flächengleiche und balkenförmig quer über die gesamte Spurbreite verlaufende Bereiche mit abwechselnd hoher und niedriger Lichtdurchlässigkeit bzw. Reflexionsfähigkeit aufweist. In der gleichen Weise ist auch die Oberflächenstruktur der höchstauflösenden Spur S4 gestaltet. In diesem Fall ist es zur Erzeugung eines ausreichend hohen Signalhubes im Meßsignal U4 und den dazugehörigen, um eine viertel bzw. halbe Periode phasenverschobenen Zusatzmeßsignale U4Z18, U4Z9, U4Z27 vorteilhaft, wenn der die Breite eines der dazugehörigen Meßfenster bestimmende Winkelbereich ein ungeradzahliges Vielfaches der halben Periodendauer des Meßsignales U4 ist.

Es ist ein besonderer Vorteil der vorliegenden Erfindung, daß eine der Spuren mit den äquidistanten, flächengleichen Bereichen mit abwechselnd hoher und niedriger Lichtdurchlässigkeit bzw. Reflexionsfähigkeit sowohl zur hochgenauen Bestimmung der absoluten Winkellage bei Stillstand der Geberscheibe dienen kann, als auch zur inkrementalen Winkellageerfassung bei Drehung der Geberscheibe mittels Zählung von inkrementalen Wegmarken. Gemäß der vorliegenden Erfindung ist die Auswerteeinheit in diesem Fall so umschaltbar, daß zur absoluten Lagebestimmung z.B. das dreieckförmige Meßsignal U3 der Spur S3 analog ausgewertet wird, bei der inkrementalen Lagebestimmung dagegen lediglich die Anzahl der Perioden von U3, und damit die Anzahl der am dazugehörigen Meßfenster vorbeilaufenden Bereiche hoher bzw. niedriger Lichtdurchlässigkeit bzw. Reflexionsfähigkeit gezählt wird. Gemäß der Ausführungsform der Geberscheibe von FIG 2 bzw. FIG 3 sind somit die Spuren S3 bzw. S4 sowohl zur absoluten Winkellagebestimmung bei Stillstand, als auch zur inkrementalen Winkellagebestimmung bei Drehung der Geberscheibe geeignet. Es ist besonders vorteilhaft, wenn als sogenannte "Inkrementalspur" zur inkrementellen Winkellageerfassung diejenige Spur verwendet wird, welche die größte Anzahl an Bereichen mit abwechselnd hoher und niedriger Lichtdurchlässigkeit bzw. Reflexionsfähigkeit pro Winkeleinheit aufweist. Im Beispiel der FIG 2 bzw. FIG 3 ist dies die Spur S4. Auf diese Weise kann der erfindungsgemäße Winkellagegeber besonders vorteilhaft zur hochgenauen absoluten Winkellagebestimmung und zur inkrementalen Winkellagebestimmung dienen, ohne daß die zur absoluten Winkellagebestimmung notwendige Anzahl von Spuren insbesondere durch eine zusätzliche Inkrementalspur erhöht werden muß. Es ist ein weiterer Vorteil, daß bei der gleichzeitigen Verwendung der höchstauflösenden Spur, z.B. S4, sowohl zur absoluten Winkellagebestimmung als auch als Inkrementalspur, die bei der absoluten Winkellagebestimmung zu erreichende Genauigkeit größer ist als bei der inkrementalen Winkellagebestimmung. Während nämlich der Momentanwert von U4 bei Stillstand der Geberscheibe analog ausgewertet werden kann, kann bei Drehung der Geberscheibe die inkrementale Winkellage nur als Vielfaches des von einer Periode von U4 eingenommenen Winkelbereiches angegeben werden.

In einer weiteren Ausgestaltungen der Erfindung ist es besonders vorteilhaft, wenn die Auswerteeinheit desweiteren so umschaltbar ist, daß eine der Spuren mit den äquidistanten, flächengleichen Bereichen mit abwechselnd hoher und niedriger Lichtdurchlässigkeit bzw. Reflexionsfähigkeit gleichzeitig als sogenannte "Referenzspur" dient. Im vorliegenden Ausführungsbeispiel gemäß der FIG 2 bzw. FIG 3 sind hierfür ebenfalls die Spuren S3 und S4 geeignet. Insbesondere durch Integration des Meßsignales U4 der Spur S4 über einen bestimmten Winkelbereich ergibt sich ein "Referenzsignal", welches einen im zeitlichen Mittel konstanten, und dem halben Meßsignalbereich entsprechenden Momentanwert aufweist. Verändert sich im Laufe des praktischen Betriebes des Winkellagegebers die Lichtdurchlässigkeit bzw. Reflexionsfähigkeit der Geberscheibe z.B. auf Grund von Verschmutzung bzw. Alterung, so nimmt auch der Momentanwert des Referenzsignales ab. Diese Abnahme kann zur Korrektur insbesondere der Momentanwerte der Meßsignale der Spuren verwendet werden, welche zur absoluten Winkellagebestimmung bei Stillstand der Geberscheibe dienen. Auf diese Weise kann besonders vorteilhaft ein ansonsten im Dauerbetriebdes Winkellagegebers ständig wachsender absoluter Winkellagefehler kompensiert werden.

In einer weiteren Ausgestaltung der Erfindung ist die Auswerteeinheit desweiteren so umschaltbar, daß eine der Spuren mit den äquidistanten, flächengleichen Bereichen mit abwechselnd hoher und niedriger Lichtdurchlässigkeit bzw. Reflexionsfähigkeit, insbesondere die Spur S4 auf. der Geberscheibe gemäß der FIG 2 bzw. FIG 3, zum Zwecke der Überwachung des Stillstandes der Geberscheibe ausgewertet wird. Eine hochgenaue Erfassung der aktuellen absoluten Winkellage ist nur bei vollständigem Stillstand der Geberscheibe möglich. Es ist ein weiterer Vorteil der Erfindung, daß diese Stillstandsüberwachung ohne eine zusätzliche Spur auf der Geberscheibe ebenfalls mit den zur Bestimmung der absoluten Winkellage in der gewünschten Genauigkeit notwendigen Anzahl von Spuren möglich ist.

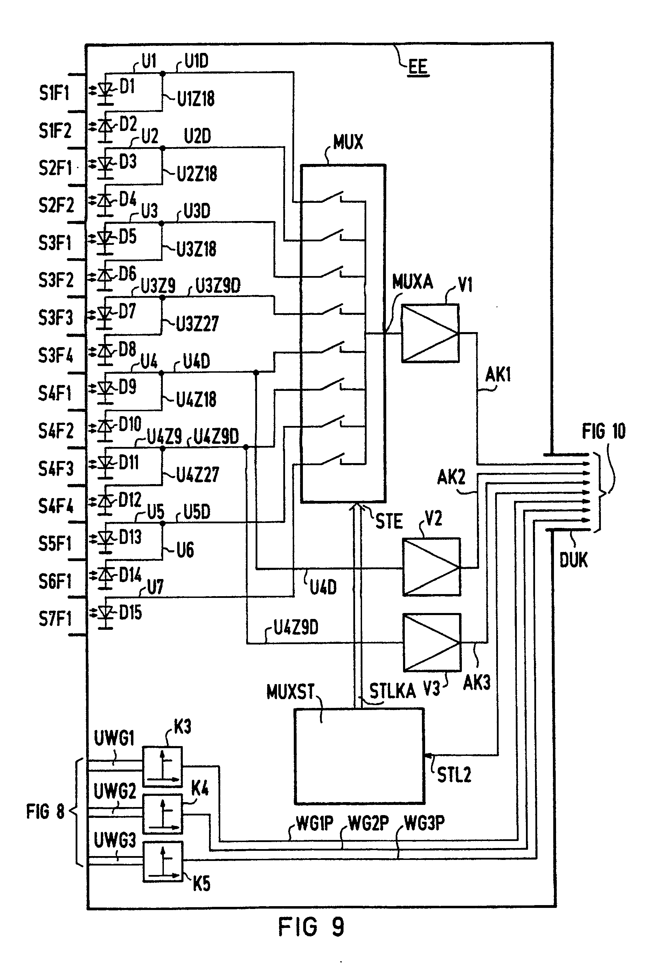

Nach einer weiteren Ausgestaltung ist der erfindungsgemäße Winkellagegeber besonders vorteilhaft mit mindestens einem sogenannten "Wiegand-Sensor" ausgerüstet. In der FIG 8 ist eine vorteilhafte Anordnung von drei derartigen Sensoren WG1 bis WG3 dargestellt, mit deren Hilfe die Anzahl der ganzen Umdrehungen und die Drehrichtung der Geberdrehwelle GDW bestimmt werden kann. Ein mit der Geberdrehwelle GDW umlaufender Setzmagnet SM erzeugt dabei bei Vorbeilaufen am jeweiligen Sensor je ein impulsförmiges Spannungsmeßsignal UWG1 bis UWG2, welche von der Auswerteeinheit zur Bestimmung der Anzahl der ganzen Umdrehungen und der aktuellen Umdrehungsrichtung ausgewertet werden. Zur Erzeugung je eines Spannungssignales mit hoher Amplitude und Flankensteilheit am Ausgang des jeweiligen Sensors ist es besonders vorteilhaft, wenn auf beiden Seiten des Setzmagneten ebenfalls mit der Geberwelle umlaufende Rücksetzmagneten RML und RMR mit umgekehrter Magnetisierung angeordnet sind. Diese setzen drehrichtungsunabhängig den jeweiligen Sensor vor der eigentlichen Erregung über den Setzmagneten SM zurück, wodurch das Spannungssignal am Ausgang des jeweiligen Sensors eine besonders hohe Flankensteilheit und Amplitude erhält.

In der FIG 9 ist eine vorteilhafte Ausführungsform eines weiteren Teiles der Erfassungseinheit EE gemäß der vorliegenden Erfindung dargestellt. Dabei ist jedem der Meßfenster, insbesondere der im Meßfenstermodul FM der FIG 3 dargestellten Meßfenster S1F1 bis S7F1, mindestens je ein Lichtdetektor D1 bis D15 zugeordnet. Als Lichtdetektoren werden vorteilhaft Fotodioden verwendet. Die durch diese Lichtdetektoren pro Spur der Geberscheibe gebildeten Meßsignale und dazugehörigen Zusatzmeßsignale werden gemäß einerder Ausgestaltungen der Erfindung jeweils zu rauscharmen Differenzmeßsignalen verarbeitet und den Eingangskanälen eines Multiplexers MUX zugeführt. So tasten z.B. die Lichtdetektoren D5 bis D7 die vier zur Spur S3 gehörigen Meßfenster S3F1 bis S3F4 ab. Der Lichtdetektor D5 bildet dabei das eigentliche Meßsignal U3 dieser Spur und der Lichtdetektor D6 das dazugehörige, gegenphasige Zusatzmeßsignal U3Z18. Durch eine geeignete Anordnung der Lichtdetektoren, im Ausführungsbeispiel der FIG 9 durch antiparallele Anordnung der entsprechenden Fotodioden, werden beide Signale zum rauscharmen Differenzmeßsignal U3D verarbeitet. In entsprechender Weise bildet der Lichtdetektor D7 das um eine viertel Periode gegenüber U3 phasenverschobene Zusatzmeßsignal U3Z9 und der Lichtdetektor D7 das dazugehörige, gegenphasige Zusatzmeßsignal U3Z27. Auch in diesem Fall werden beide Signale durch geeignete Verbindung der beiden Lichtdetektoren D7 und D8 zum rauscharmen Differenzmeßsignal U3Z9D verarbeitet. Die von den übrigen Lichtdetektoren erfaßten Meßsignale werden in der gleichen Weise bevorzugt zu rauscharmen, dreieckförmigen Differenzmeßsignalen U1D bis U5D der Spuren S1 bis S5 verarbeitet.

Gemäß der vorliegenden Erfindung tastet der Multiplexer MUX diese Meßsignale gesteuert über eine Multiplexersteuerung MUXST sukzessive ab, und speist diese über den Ausgang MUXA in einen ersten Analogwertkanal AK1 ein. Die Adresse des jeweils vom Multiplexer an seinen Ausgang durchzuschaltenden Eingangskanales wird bevorzugt über einen Steuereingang STE und mittels einer Kanaladreßsteuerleitung STLKA von der Multiplexersteuerung MUXST vorgegeben. Zum Zwecke der bereits beschriebene Stillstandsüberwachung ist es besonders vorteilhaft, wenn das Meßsignal einer der Spuren mit den äquidistanten, flächengleichen Bereichen mit abwechselnd hoher und niedriger Lichtdurchlässigkeit bzw. Reflexionsfähigkeit am Multiplexer vorbei direkt in einen weiteren Analogwertkanal eingespeist wird. Zu diesem Zweck wird im Ausführungsbeispiel der FIG 9 das zum Meßsignal U4 der Spur S4 gehörige rauscharme Differenzmeßsignal U4D direkt in den zweiten Analogwertkanal AK2 eingespeist. Wird darüber hinausgehend das zu dem um eine viertel Periode phasenverschobenen Zusatzmeßsignal U4Z9 gehörige rauscharme Differenzmeßsignal U4Z9D in einen weiteren, dritten Analogwertkanal AK3 eingespeist, so kann die Auswerteeinheit mit Hilfe der beiden Signale U4D und U4Z9D zusätzlich zur Stillstandsüberwachung auch die aktuelle Drehrichtung der Geberscheibe erfassen.

Gemäß FIG 9 steht die Erfassungseinheit EE bevorzugt über einen Datenübertragungskabel DUK mit der Auswerteeinheit in Verbindung. Dabei überträgt die Erfassungseinheit über den ersten Analogwertkanal AK1 sukzessiv hintereinander, vom Multiplexer MUX gesteuert, die dreieckförmigen Meßsignale der einzelnen Geberspuren, und über die beiden weiteren Analogwertkanäle AK2, AK3 am Multiplexer vorbei die beiden Meßsignal U4D, U4Z9D. Vorteilhaft werden die einzelnen Analogwertkanäle bevorzugt zur Einspeisung in das Datenübertragungskabel über je einen Verstärker V1 bis V3 geführt. Mit umgekehrter Signalrichtung wird desweiteren der Multiplexersteuerung MUXST über eine ebenfalls bevorzugt über das Datenübertragungskabel geführte Steuerleitung STL2 die bevorzugt pulsdauermoduliert kodierte aktuelle Multiplexerkanaladresse übertragen. Schließlich enthält die Erfassungseinheit EE je einen ersten, zweiten und dritten Komparator K3 bis K5 für die Spannungsmeßsignale UWG1 bis UWG3 der Wiegand-Sensoren. Hiermit wird für jeden der Sensoren ein binärer Meßimpuls WG1P bis WG3P erzeugt, welche über weitere, bevorzugt über das Detenübertragungskabel geführte Signalleitungen ebenfalls der Auswerteeinheit zugeführt werden.

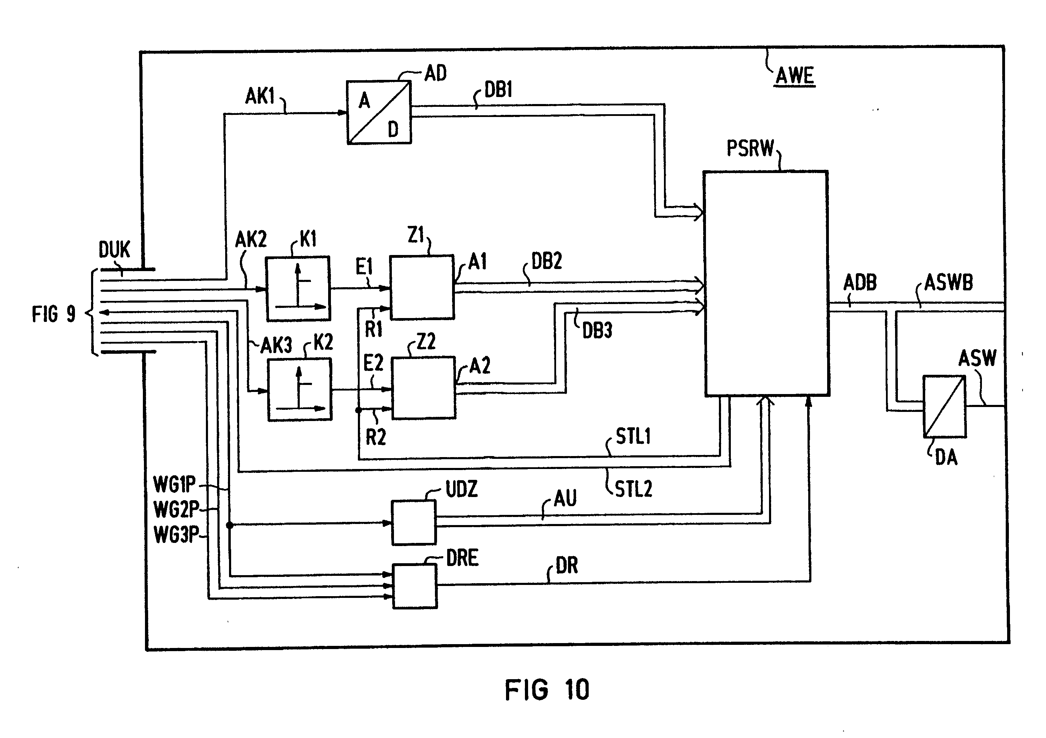

In der FIG 10 ist eine vorteilhafte Ausführungsform der Auswerteeinheit AWE gemäß der vorliegenden Erfindung dargestellt. Diese enthält im wesentlichen einen Analog-Digital-Wandler AD und ein Programmsteuer- und Rechenwerk PSRW. Zur Ermittlung der absoluten Winkellage der Geberscheibe gemäß der vorliegenden Erfindung fordert dabei das Programmsteuer- und Rechenwerk über die Steuerleitung STL2 von der Erfassungseinheit EE sukzessiv hintereinander die einzelnen dreieckförmigen Meßsignale der Spuren der Geberscheibe an. Diese werden von der Erfassungseinheit EE in einer vom Programmsteuer- und Rechenwerk PSRW vorgegebenen Abfolge in den ersten Analogwertkanal AK1 eingespeist, vom Analog-Digital-Wandler AD binär kodiert und schließlich über den ersten Datenbus DB1 in das Programmsteuer- und Rechenwerk eingespeist. Dies ermittelt in der insbesondere anhand der FIG 3 und 4 oben beschriebenen Weise die absolute Winkellage ASW bei Stillstand der Geberscheibe, und gibt diese auf einen Ausgangsdatenbus ADB als binär kodierten absoluten Geberscheibenwinkel ASWB aus. Dieses binäre Wort kann nicht dargestellten weiteren Verarbeitungseinheiten, insbesondere Protokollier- und Registriereinheiten zugeführt werden. Zur direkten Ablesung des momentanen Geberlagewinkels ist es vorteilhaft, die Binärkodierung ASWB über einen zusätzlichen Digital-Analog-Wandler DA in die analoge Darstellung ASW rückzukonvertieren.

Die der Auswerteeinheit AWE ebenfalls bevorzugt über das Datenübertragungskabel DUK zugeführten weiteren Analogwertkanäle AK2 und AK3 werden je einem dritten und vierten Komparator K1 und K2 zur Erzeugung je eines binären Signales zugeführt. Diese werden von je einem nachgeschalteten ersten bzw. zweiten Zähler Z1 bzw. Z2 gezählt und über je einen weiteren zweiten bzw. dritten Datenbus DB2 bzw. DB3 ebenfalls dem Programmsteuer- und Rechenwerk binär kodiert zugeführt. Wie bereits oben ausgeführt, kann die Auswerteeinheit so umgeschaltet werden, daß diese Signale bei Stillstand der Geberscheibe zur Stillstandsüberwachung bzw. bei Drehung der Geberscheibe sowohl zur inkrementellen Winkellageerfassung über Zählung der Perioden der über die jeweiligen Analogwertkanäle übertragenen elektrischen Meßsignale, als auch zur Erfassung der aktuellen Drehrichtung der Geberdrehwelle dienen. Bei Bedarf können die Zähler Z1 und Z2 vom Programmsteuerund Rechenwerk PSRW über eine weitere Steuerleitung STL1 rückgesetzt werden.

Schließlich ist in der FIG 10 je ein weiterer Umdrehungszähler UDZ und eine weitere Drehrichtungserfassungseinheit DRE dargestellt. Dabei erfaßt der Umdrehungszähler UDZ durch Auswertung des binären Meßimpulses eines der Wiegand-Sensoren die Anzahl der ganzen Umdrehungen und führt diese binär kodiert in Form des Signales AU dem Programmsteuer- und Rechenwerk zu. Desweiteren erfaßt die Drehrichtungserfassungseinheit DRE durch Auswertung der binären Meßimpulses WG1P bis WG3P der drei Wiegand-Sensoren die aktuelle Drehrichtung, und speist diese ebenfalls in Form eines Binärsignales DRE in das Programmsteuer- und Rechenwerk ein. In einer weiteren Ausführungsform der Erfindung können der Umdrehungszähler und die Drehrichtungserfassungseinheit auch direkt im Programmsteuer- und Rechenwerk untergebracht werden.

## Ansprüche

1. Hochgenauer Winkellagegeber (G) mit einer drehbaren Geberscheibe (GS), auf der konzentrische, fotoelektrisch abtastbare Spuren (S1 bis S7) ringförmig angeordnet sind, und mit mindestens einer Lichtquelle (L), welche die Spuren möglichst homogen beleuchtet, und mit einer Erfassungseinheit (EE), welche für jede der Spuren mittels mindestens einem Meßfenster mit einer einen bestimmten Winkelbereich der Geberscheibe umfassenden Breite die Stärke des hindurchtretenden bzw. reflektierten Lichtes in mindestens ein elektrisches Meßsignal (U1 bis U7) umsetzt, und mit einer Auswerteeinheit (AWE), welche aus den Meßsignalen bei Stillstand der Geberscheibe (GS) deren absolute Winkellage (ASW) bezogen auf eine vorgegebene Referenzlage (N) ermittelt, wobei

a) die Lichtdurchlässigkeit bzw. Reflexionsfähigkeit einer Gruppe von Spuren (S1 bis S4) solche periodische Funktionen des Drehwinkels sind, daß die von der Erfassungseinheit gebildeten Meßsignale (U1 bis U4) periodische, annähernd dreieckförmige Funktionen des Drehwinkels sind,

b) bei einer Spur (S3,S4) aus der Gruppe, bei der der Winkelbereich, welcher die Breite des dazugehörigen Meßfensters (S3F1,S4F1) bestimmt, gleich groß dem zu einer halben Periode (U3P1H1,U4P1H1) des entsprechenden Meßsignals (U3,U4) gehörigen Winkelbereich bzw. ein ungeradzahliges Vielfaches davon ist, diese Spur äquidistante, flächengleiche und balkenförmig über die gesamte Spurbreite verlaufende Bereiche mit abwechselnd hoher und niedriger Lichtdurchlässigkeit bzw. Reflexionsfähigkeit (BS3H,BS3N) aufweist,

c) die Auswerteeinheit (AWE) so umschaltbar ist, daß eine Spur (S3,S4) aus der Gruppe mit äquidistanten, flächengleichen Bereichen mit abwechselnd hoher und niedriger Lichtdurchlässigkeit bzw. Reflexionsfähigkeit zum einen zur Bestimmung der absoluten Winkellage bei Stillstand der Geberscheibe (GS), und zum anderen als Inkrementalspur zur inkrementellen Lageerfassung bei Drehung der Geberscheibe dient, indem die Anzahl der an der Erfassungseinheit vorbeilaufenden Bereiche gezählt wird.

2. Winkellagegeber nach Anspruch 1, **dadurch gekennzeichnet,** daß

a) die Lichtdurchlässigkeiten bzw. Reflexionsfähigkeiten der Spuren aus der Gruppe untereinander so gestaffelt sind, daß die sich bei einer vollen Umdrehung der Geberscheibe für die Meßsignale der jeweiligen Spuren ergebenden Periodensummen untereinander abgestuft sind,

b) die innerhalb einer ganzen Periode des Meßsignales (U1P1) für eine der Spuren (S1) aus der Gruppe auftretende Periodensumme im Meßsignal (U2) einer anderen Spur (S2) aus der Gruppe, deren Periodensumme den nächst höheren Wert hat, davon bestimmt wird, daß durch Auswertung des analogen Momentanwertes des zu der einen Spur (S1) gehörigen Meßsignales (U1) die dazugehörige Periode (U2P1) auf der anderen Spur (2) noch sicher identifiziert werden kann,

c) Mittel vorgesehen sind, um nach der Auswertung des Meßsignales (U1) der einen Spur (S1) aus der Gruppe und nach der Identifizierung der dazugehörigen Periode (U2P1) auf der anderen Spur (S2) aus der Gruppe zwischen der ersten und zweiten Hälfte (U2P1H1,U2P1H2) der auf der anderen Spur (S2) identifizierten Periode (U2P1) zu unterscheiden, und

d) die Anzahl der Spuren auf der Geberscheibe von der gewünschten Genauigkeit abhängig ist, insbesondere von der Genauigkeit, welche zur Ermittlung der die aktuelle Lage der Geberscheibe kennzeichnenden inkrementellen Wegmarke einer als Inkrementalspur dienenden Spur aus der Gruppe (S4) notwendig ist.

3. Winkellagegeber nach Anspruch 1 oder 2, **gekennzeichnet** durch eine als Koordinationsspur (S5) auf der Geberscheibe (GS) ausgebildeten Spur, welche als Mittel zur Zuordnung des Momentanwertes der einen Spur zur entsprechenden Hälfte der auf der anderen Spur identifizierten Periode dient und über stufig unterschiedliche Werte der Lichtdurchlässigkeit bzw. Reflexionsfähigkeit verfügt, wobei der ersten und der zweiten Hälfte der Perioden des dreieckförmigen Meßsignals einer jeden Spur aus der Gruppe ein bestimmter Stufenwert (25 %, 50 %, 75 %, 100 %) zugeordnet ist.

4. Winkellagegeber nach Anspruch 1, 2 oder 3, **dadurch gekennzeichnet,** daß als Mittel zur Zuordnung des Momentanwertes (U2) der einen Spur (S2) zur entsprechenden Hälfte der auf der anderen Spur (S3) identifizierten Periode (U3P2) die Erfassungseinheit (EE) zusätzlich zum dreieckförmigen Meßsignal (U3) für die andere Spur (S3) ein dreieckförmiges Zusatzmeßsignal (U3Z9) bereitstellt, welches um eine viertel Periode phasenverschoben ist, und die Auswerteeinheit (AWE) den Momentanwert der ersten oder zweiten Periodenhälfte (U3P2H1 bzw. U3P2H2) zuordnet, wenn bei Phasennacheilung des Zusatzmeßsignals dessen Momentanwert in der unteren (0-50 %) oder oberen Hälfte (50-100 %) des Meßsignalbereiches, bzw. bei Phasenvoreilung in der oberen oder unteren Hälfte liegt.

5. Winkellagegeber nach Anspruch 4, **dadurch gekennzeichnet,** daß die Auswerteeinheit (AWE) so umschaltbar ist, daß solange der Meßsignalmomentanwert (U3) einer Spur aus der Gruppe einen oberen Grenzwert (U3OG) überschritten bzw. einen unteren Grenzwert (U3UG) unterschritten hat, zur Bestimmung der aktuellen Winkellage (ASW) der Geberscheibe der Momentanwert des dazugehörigen, um eine viertel Periode phasenverschobenen Zusatzmeßsignales (U3Z9) ausgewertet wird

6. Winkellagegeber nach einem der vorangegangenen Ansprüche, **dadurch gekennzeichnet,** daß bei einer Spur (S1,S2) aus der Gruppe, bei der der Winkelbereich, welcher die Breite des dazugehörigen Meßfensters (S1F1,S2F2) bestimmt, klein ist gegenüber dem zu einer vollen Periode (U1P1,U2P1) des entsprechenden Meßsignals (U1,U2) gehörige Winkelbereich (WBS1, WBS2), die Lichtdurchlässigkeit bzw. Reflexionsfähigkeit dieser Spur in den jeweils einer ganzen Meßsignalperiode entsprechenden Winkelbereichen der Geberscheibe in Spurbreite kontinuierlich und periodisch bis zu einem Maximalwert zu und anschließend bis zu einem Minimalwert so abnimmt, daß das Meßsignal (U1,U2) eine periodische, annähernd dreieckförmige Funktion des Drehwinkels ist.

7. Winkellagegeber nach einem der vorangegangenen Ansprüche, **dadurch gekennzeichnet,** daß die Auswerteeinheit (AWE) so umschaltbar ist, daß zur Überwachung des Stillstandes der Geberscheibe (GS) das zu einer Spur mit äquidistanten, flächengleichen Bereichen mit abwechselnd hoher und niedriger Lichtdurchlässigkeit bzw. Reflexionsfähigkeit gehörige Meßsignal, insbesondere das zu der Spur (S4) mit der größten Anzahl solcher Bereiche pro Winkeleinheit gehörige Meßsignal (U4), von der Auswerteeinheit (AWE) überwacht wird.

8. Winkellagegeber nach einem der vorangegangenen Ansprüche **dadurch gekennzeichnet,** daß die Auswerteeinheit (AWE) so umschaltbar ist, daß bei Drehung der Geberscheibe eine Spur (S3,S4) aus der Gruppe mit äquidistanten, flächengleichen Bereichen mit abwechselnd hoher und niedriger Lichtdurchlässigkeit bzw. Reflexionsfähigkeit als Referenzspur mit einer im Mittel konstanten Lichtdurchlässigkeit bzw. Reflexionsfähigkeit dient.

9. Winkellagegeber nach einem der vorangegangenen Ansprüche, **dadurch gekennzeichnet,** daß zusätzlich zu dem dreieckförmigen Meßsignal (U1 bis U4) für jede der Spuren der Gruppe (S1 bis S4) von der Erfassungseinheit (EE) ein gegenphasiges, dreieckförmiges Zusatzmeßsignal (U1Z18 bis U4Z18) bereitgestellt wird, und der Auswerteeinheit die Differenz (U1D bis U4D) beider Meßsignale als elektrisches Meßsignal zur Bestimmung der absoluten Winkellage (ASW) zugeführt wird.

10. Winkellagegeber nach einem der vorangegangenen Ansprüche, **dadurch gekennzeichnet,** daß die Erfassungseinheit (EE)

a) Lichtdetektoren (D1 bis D15), insbesondere Fotodioden, zur Erzeugung der elektrischen Meßsignale (U1 bis U7) der Spuren (S1 bis S7),

b) einen Multiplexer (MUX) zum sukzessiven Abtasten und Einspesen des jeweiligen Momentanwertes der einzelnen elektrischen Meßsignale in einen ersten Analogwertkanal (AK1),

c) eine Multiplexersteuerung (MUXST) zur Auswahl des jeweils abzutastenden und einzuspeisenden Meßsignales, und

d) einen ersten Verstärker (V1) zur Verstärkung des jeweils vom Multiplexer dem ersten Analogwertkanal (AK1) zugeführten Meßsignales, insbesondere für die Weiterleitung über ein an die Erfassungseinheit angeschlossenes Datenübertragungskabel (DUK) enthält.

11. Winkellagegeber nach Anspruch 10, **dadurch gekennzeichnet,** daß die Auswerteeinheit (AWE)

a) einen Analog-Digital-Wandler (AD) für die von der Erfassungseinheit (EE) in den ersten Analogwertkanal (AK1) eingespeisten elektrischen Meßsignale, und

b) ein Programmsteuer- und Rechenwerk (PSRW), welches über eine insbesondere über ein Datenübertragungskabel (DUK) geführte erste Steuerleitung (STL2) mit der Multiplexersteuerung (MUXST) in der Erfassungseinheit (EE) verbunden ist und hierüber das sukzessive Abtasten und Einspeisen der einzelnen elektrischen Meßsignale der Spuren in den ersten Analogwertkanal (AK1) durch den Multiplexer steuert, und welches durch Auswertung der vom Analog-Digital-Wandler über einen ersten Datenbus (DB1) sukzessiv zugeführten elektrischen Meßsignale insbesondere der Spuren der Gruppe die absolute Winkellage (ASW) der Geberscheibe bezogen auf die Referenzlage (N) ermittelt enthält.

12. Winkellagegeber nach Anspruch 10 oder 11, **gekennzeichnet** durch eine Erfassungseinheit (EE) mit einem zweiten Analogwertkanal (AK2) zur Weiterleitung des elektrischen Meßsignales einer Spur aus der Gruppe mit äquidistanten, flächengleichen Bereichen mit abwechselnd hoher und niedriger Lichtdurchlässigkeit, insbesondere der Spur (S4) mit der größten Anzahl solcher Bereiche pro Winkeleinheit.

13. Winkellagegeber nach Anspruch 12, **gekennzeichnet** durch eine Auswerteeinheit (AWE) mit einem ersten, vom zweiten Analogwertkanal (AK2) angesteuerten Komparator (K1), mit einem nachgeschalteten ersten Zähler (Z1) zum inkrementellen Zählen der bei Drehung der Geberscheibe auftretenden ganzen Perioden des vom zweiten Analogwertkanal übertragenen elektrischem Meßsignales (U4), und mit einem zweiten Datenbus (DB2) zur Übertragung des Zählerstandes in das Programmsteuer- und Rechenwerk (PSRW).

14. Winkellagegeber nach einem der vorangegangenen Ansprüche, **gekennzeichnet** durch mindestens einen WiegandSensor (WG1) zur Ermittlung der Anzahl der ganzen Umdrehungen der Geberscheibe, welcher durch einen mit der Geberscheibe umlaufenden Magneten (SM) erregt wird.

15. Winkellagegeber nach Anspruch 14, **dadurch gekennzeichnet,** daß zur Erfassung der aktuellen Umdrehungsrichtung mindestens drei Wiegand-Sensoren (WG1 bzw. WG3) vorgesehen sind, die insbesondere in gleichem Abstand voneinander auf einem Kreisbogen angeordnet sind und nacheinander von dem mit der Geberscheibe umlaufenden Magneten (SM) erregt werden.

16. Winkellagegeber nach Anspruch 14 oder 15, **dadurch gekennzeichnet,** daß zur Erzeugung eines Spannungssignales (UWG1 bzw. UWG3) mit hoher Amplitude und Flankensteilheit am Ausgang eines der Wiegand-Sensoren auf beiden Seiten des erregenden Magneten (SM) ebenfalls mit der Geberscheibe umlaufende Magnete (RML,RMR) mit umgekehrter Magnetisierung angeordnet sind, welche vor der eigentlichen Erregung ein Rücksetzen des Sensors bewirken.

## Claims

1. High-precision angular position encoder (G) with a rotatable encoder disc (GS), on which concentric tracks (S1 to S7), which can be photo-electrically scanned, are arranged in an annular manner, and with at least one light source (L), which illuminates the tracks as homogeneously as possible, and with a detection unit (EE), which converts the intensity of the light passing through or reflected, by means of at least one measuring window with a width comprising a certain angular region of the encoder disc for each of the tracks, into at least one electrical measuring signal (U1 to U7), and with an evaluation unit (AWE), which determines from the measuring signals, when the encoder disc (GS) is at a standstill, its absolute angular position (ASW) relative to a predetermined reference position (N), wherein

   a) the light transmittance or reflection capacity of a group of tracks (S1 to S4) are periodical functions of the angle of rotation such that the measuring signals (U1 to U4) formed by the detection unit are periodical, approximately triangular, functions of the angle of rotation,

   b) with a track (S3,S4) from the group in which the angular region, which determines the width of the measuring window (S3F1,S4F1) belonging to it, is the same size as the angular region belonging to a half period (U3P1H1,U4P1H1) of the corresponding measuring signal (U3,U4), or an odd-numbered multiple thereof, this track has equidistant regions, of equal area and extending in a bar-like manner over the entire track width, with alternately high and low light transmittance or reflection capacity (BS3H,BS3N),

   c) the evaluation unit (AWE) can be switched over in such a way that a track (S3,S4) from the group with equidistant regions of equal area with alternately high and low light transmittance or reflection capacity serves on the one hand to determine the absolute angular position when the encoder disc (GS) is at a standstill, and on the other hand serves as incremental track for the incremental position detection with rotation of the encoder disc, in that the number of the regions passing the detection unit is counted.

2. Angular position encoder according to claim 1,

characterized in that

   a) the light transmittances or reflection capacities of the tracks from the group are staggered relative to one another in such a way that the period sums resulting with a complete revolution of the encoder disc for the measuring signals of the respective tracks are graded relative to one another,

   b) the period sum, occurring within an entire period of the measuring signal (U1P1) for one of the tracks (S1) from the group, in the measuring signal (U2) of a different track (S2) from the group, the period sum of which has the next higher value, is determined in that through evaluation of the analogous instantaneous value of the measuring signal (U1) belonging to the one track (S1) the period (U2P1) belonging to it on the other track (2) can still be identified safely,

   c) means are provided in order to differentiate between the first and second half (U2P1H1,U2P1H2) of the period (U2P1) identified on the other track (S2), after the evaluation of the measuring signal (U1) of the one track (S1) from the group and after the identification of the period (U2P1) belonging to it on the other track (S2) from the group, and

   d) the number of the tracks on the encoder disc is dependent on the desired accuracy, more particularly on the accuracy which is necessary for the determination of the incremental path marker of a track from the group (S4) serving as incremental track, which marker characterizes the actual position of the encoder disc.

3. Angular position encoder according to claim 1 or 2, characterized by a track constructed as coordination track (S5) on the encoder disc (GS), which track serves as means for the allocation of the instantaneous value of the one track to the corresponding half of the period identified on the other track and has at its disposal values of the light transmittance or reflection capacity which differ in a graded manner, whereby there is allocated a certain value level (25%, 50%, 75%, 100%) to the first and the second half of the periods of the triangular measuring signal of each track from the group.

4. Angular position encoder according to claim 1, 2 or 3, characterized in that as means for the allocation of the instantaneous value (U2) of the one track (S2) to the corresponding half of the period (U3P2) identified on the other track (S3) the detection unit (EE) in addition to the triangular measuring signal (U3) for the other track (S3) prepares a triangular additional measuring signal (U3Z9), which is out of phase by a quarter period, and the evaluation unit (AWE) allocates the instantaneous value of the first or second period half (U3P2H1 or U3P2H2), if, with phase lag of the additional measuring signal, its instantaneous value lies in the lower (0-50%) or upper half (50-100%) of the measuring signal region, or with phase lead in the upper or lower half.

5. Angular position encoder according to claim 4, characterized in that the evaluation unit (AWE) can be switched over in such a way that as long as the measuring signal instantaneous value (U3) of a track from the group has exceeded an upper limiting value (U3OG) or has fallen short of a lower limiting value (U3UG), the instantaneous value of the additional measuring signal (U3Z9) belonging to it, out of phase by a quarter period, is evaluated for the determination of the actual angular position (ASW) of the encoder disc.

6. Angular position encoder according to one of the preceding claims, characterized in that with a track (S1,S2) from the group in which the angular region, which determines the width of the measuring window (S1F1,S2F2) belonging to it, is small relative to the angular region (WBS1,WBS2) belonging to a complete period (U1P1,U2P1) of the corresponding measuring signal (U1,U2), the light transmittance or reflection capacity of this track in the angular regions of the encoder disc, corresponding in each case to an entire measuring signal period, reduces in track width continuously and periodically until a maximum value and subsequently until a minimum value in such a way that the measuring signal (U1,U2) is a periodical, approximately triangular function of the angle of rotation.

7. Angular position encoder according to one of the preceding claims, characterized in that the evaluation unit (AWE) can be switched over in such a way that for the monitoring of the standstill of the encoder disc (GS) the measuring signal belonging to a track with equidistant regions of equal area with alternately high and low light transmittance or reflection capacity, in particular the measuring signal (U4) belonging to the track (S4) with the largest number of such regions per angular unit, is monitored by the evaluation unit (AWE).

8. Angular position encoder according to one of the preceding claims, characterized in that the evaluation unit (AWE) can be switched over in such a way that with rotation of the encoder disc a track (S3,S4) from the group with equidistant regions of equal area with alternately high and low light transmittance or reflection capacity serves as reference track with a light transmittance or reflection capacity constant in the middle.

9. Angular position encoder according to one of the preceding claims, characterized in that in addition to the triangular measuring signal (U1 to U4) for each of the tracks of the group (S1 to S4) a triangular additional measuring signal (U1Z18 to U4Z18) in phase opposition is prepared by the detection unit (EE), and the difference (U1D to U4D) of both measuring signals is supplied to the evaluation unit as electrical measuring signal for the determination of the absolute angular position (ASW).

10. Angular position encoder according to one of the preceding claims, characterized in that the detection unit (EE) contains
a) light detectors (D1 to D15), in particular photodiodes, for the production of the electrical measuring signals (U1 to U7) of the tracks (S1 to S7),
b) a multiplexer (MUX) for the successive scanning and feeding of the respective instantaneous value of the individual electrical measuring signals into a first analog value channel (AK1),
c) a multiplexer control (MUXST) for the selection of the measuring signal to be scanned and fed in in each case, and
d) a first amplifier (V1) for the amplification of the measuring signal, supplied in each case by the multiplexer to the first analog value channel (AK1), in particular for the further conduction by means of a data transmission cable (DUK) attached to the detection unit.

11. Angular position encoder according to claim 10, characterized in that the evaluation unit (AWE) contains
a) an analog-to-digital converter (AD) for the electrical measuring signals fed by the detection unit (EE) into the first analog value channel (AK1), and
b) a program control and arithmetic unit (PSRW), which is connected to the multiplexer control (MUXST) in the detection unit (EE) by means of a first control line (STL2), conducted in particular by means of a data transmission cable (DUK), and over here controls the successive scanning and feeding of the individual electrical measuring signals of the tracks into the first analog value channel (AK1) through the multiplexer, and which by means of evaluation of the electrical measuring signals, in particular of the tracks of the group, successively supplied by the analog-to-digital converter by means of a first data bus (DB1), determines the absolute angular position (ASW) of the encoder disc relative to the reference position (N).

12. Angular position encoder according to claim 10 or 11, characterized by a detection unit (EE) with a second analog value channel (AK2) for the further conduction of the electrical measuring signal of a track from the group with equidistant regions of equal area with alternately high and low light transmittance, in particular of the track (S4) with the largest number of such regions per angular unit.

13. Angular position encoder according to claim 12, characterized by an evaluation unit (AWE) with a first comparator (K1), controlled by the second analog value channel (AK2), with a subsequently connected first counter (Z1) for the incremental counting of the complete periods of the electrical measuring signal (U4) transmitted by the second analog value channel, occurring with rotation of the encoder disc, and with a second data bus (DB2) for the transmission of the count into the program control and arithmetic unit (PSRW).

14. Angular position encoder according to one of the preceding claims, characterized by at least one Wiegand sensor (WG1) for the determination of the number of the entire revolutions of the encoder disc, which is excited by a magnet (SM) circulating with the encoder disc.

15. Angular position encoder according to claim 14, characterized in that for the detection of the actual revolution direction at least three Wiegand sensors (WG1 or WG3) are provided, which are arranged in particular at the same distance from one another on an arc and are successively excited by the magnet (SM) circulating with the encoder disc.

16. Angular position encoder according to claim 14 or 15, characterized in that for the production of a voltage signal (UWG1 or UWG3) with high amplitude and rapid edge transition at the output of one of the Wiegand sensors on both sides of the exciting magnet (SM) likewise magnets (RML, RMR) circulating with the encoder disc with reversed magnetization are arranged, which effect a resetting of the sensor before the actual excitation.

## Revendications

1. Capteur de position angulaire de grande précision (G) comportant un disque de détection rotatif (GS), sur lequel sont disposées, sous forme annulaire, des pistes concentriques (S1 à S7) pouvant être explorées par voie photoélectrique, et comportant au moins une source de lumière (L), qui éclaire les pistes d'une manière aussi homogène que possible, et une unité de détection (EE), qui convertit, pour chacune des pistes, à l'aide d'au moins une fenêtre de mesure possédant une largeur englobant une plage angulaire déterminée du disque de détection, convertit l'intensité de la lumière transmise ou réfléchie en au moins un signal électrique de mesure (U1 à U7), et comportant une unité d'évaluation (AWE), qui, lorsque le disque de détection (GS) est à l'arrêt, détermine à partir des signaux de mesure leur position angulaire absolue (ASW) par rapport à une position de référence (N) prédéterminée,

    a) le pouvoir de transmission de la lumière et le pouvoir réfléchissant pour la lumière d'un groupe de pistes (S1 à S4) étant des fonctions périodiques de l'angle de rotation telles que les signaux de mesure (U1 à U4), formés par les signaux de détection, étant des fonctions périodiques, approximativement triangulaires, de l'angle de rotation,

    b) dans le cas d'une piste (S3,S4) faisant partie du groupe et dans laquelle la plage angulaire, qui détermine la largeur de la fenêtre de mesure associée (S3F1, S4F1), est égale à la plage angulaire associée à une moitié de la période (U3P1H1, U4P1H1) du signal de mesure correspondant (U3,U4), ou à un multiple entier impair de cette demi-période, cette piste comporte des zones équidistantes, de mêmes surfaces et s'étendant avec une forme de trait sur toute la largeur de la piste, et possédant un pouvoir de transmission de la lumière ou un pouvoir réfléchissant pour la lumière, alternativement élevée et faible (BS3H, BS3N),

    c) l'unité d'évaluation (AWE) peut être commutée de telle sorte qu'une piste (S3,S4) du groupe comportant des zones équidistantes et de même surface avec un pouvoir de transmission de la lumière ou un pouvoir réfléchissant pour la lumière, alternativement élevé et faible, est utilisée d'une part pour déterminer la position angulaire absolue lorsque le disque de détection (GS) est à l'arrêt, et d'autre part en tant que piste incrémentale pour la détection incrémentale de position lors de la rotation du disque, par le fait que le nombre des zones passant devant l'unité de détection est compté.

2. Capteur de position angulaire suivant la revendication 1, caractérisé par le fait que

a) le pouvoir de transmission de la lumière ou le pouvoir réfléchissant pour la lumière des pistes du groupe sont échelonnées entre elles et que les sommes de périodes, qui sont obtenues lors d'une rotation complète du disque de détection pour les signaux de mesure des pistes respectives, sont échelonnées entre elles,

b) la somme de périodes, qui apparaît à l'intérieur d'une période complète du signal de mesure (U1P1) pour l'une des pistes (S1) du groupe est déterminée dans le signal de mesure (U2) d'une autre piste (S2) du groupe, dont la somme de périodes possède la valeur élevée immédiatement supérieure, par le fait que, par évaluation de la valeur analogique instantanée du signal de mesure (U1) associé à une piste (S1), la période associée (U2P1) est encore identifiée de façon sûre sur l'autre piste (2),

c) il est prévu des moyens permettant de différencier, après l'évaluation du signal de mesure (U1) d'une piste (S1) du groupe et après l'identification de la période associée (U2P1) dans l'autre piste (S2) du groupe, les première et seconde moitiés (U2P1H1, U2P1H2) de la période (U2P1) identifiée dans l'autre piste (S2), et

d) le nombre des pistes sur le disque de détection dépend de la précision désirée, notamment de la précision qui est nécessaire pour déterminer la marque incrémentale de déplacement, qui caractérise la position actuelle du disque, d'une piste du groupe (S4), qui est utilisée comme piste incrémentale.

3. Capteur de position angulaire suivant la revendication 2, caractérisé par une piste, qui est agencée en tant que piste de coordination (S5) sur le disque de détection (GS) et sert de moyen pour associer la valeur instantanée d'une piste à la moitié correspondante de la période identifiée pour l'autre piste et dispose de valeurs, qui diffèrent d'une manière étagée, un pouvoir de transmission de la lumière ou un pouvoir réfléchissant pour la lumière, une valeur d'échelon déterminée (25 %, 50 %, 75 %, 100 %) sont associées aux première et seconde moitiés des périodes du signal de mesure triangulaire de chaque piste du groupe.

4. Capteur de position angulaire suivant la revendication 1,2 ou 3, caractérisé par le fait qu'en tant que moyen pour associer la valeur instantanée (U2) d'une piste (S2) à la moitié correspondante de la période (U3P2) identifiée sur l'autre piste (S3), l'unité de détection (EE) fournit, en plus du signal de mesure triangulaire (U3) pour l'autre piste (S3), un signal de mesure triangulaire supplémentaire (U3Z9), qui est déphasé d'un quart de la période, et que l'unité d'évaluation (AWE) associe la valeur instantanée à la première ou seconde moitié de période (U3P2H1 ou U3P2H2), lorsque, dans le cas d'un retard de phase du signal de mesure supplémentaire, sa valeur instantanée se situe dans la moitié inférieure (0-50 %) et dans la moitié supérieure (50-100 %) de la gamme du signal de mesure ou, dans le cas d'une avance de phase, dans la moitié supérieure ou dans la moitié inférieure.

5. Capteur de position angulaire suivant la revendication 4, caractérisé par le fait que l'unité d'évaluation (AW1) peut être commutée de telle sorte que, tant que la valeur instantanée (U3) du signal de mesure d'une piste du groupe dépasse vers le haut une valeur limite supérieure (U3OG) ou dépasse vers le bas une valeur limite inférieure (U3UG), pour déterminer la position angulaire actuelle (ASW) du disque de détection, on évalue la valeur instantanée du signal de mesure supplémentaire associé (U3Z9), déphasé d'un quart de la période.

6. Capteur de position angulaire suivant l'une des revendications précédentes, caractérisé par le fait que dans le cas d'une piste (S1,S2) du groupe, pour laquelle la plage angulaire, qui détermine la largeur de la fenêtre de mesure associée (S1F1, S2F2), est faible par rapport à la plage angulaire (WBS1, WBS2) associée à une période complète (U1P1, U2P1) du signal de mesure correspondant (U1,U2), le pouvoir de transmission de la lumière ou le pouvoir réfléchissant pour la lumière de cette piste dans les plages angulaires du disque de détection, qui correspondent respectivement à une période complète du signal de mesure, augmente, sur la largeur de piste, continûment ou périodiquement jusqu'à une valeur maximale, puis diminue jusqu'à une valeur minimale, de sorte que le signal de mesure (U1,U2) est une fonction périodique, approximativement triangulaire, de l'angle de rotation.

7. Capteur de position angulaire suivant l'une des revendications précédentes, caractérisé par le fait que l'unité d'évaluation (AWE) peut être commutée de telle sorte que pour le contrôle de l'état d'arrêt du disque de détection (GS), on contrôle le signal de mesure, qui est associé à une piste possédant des zones équidistantes et de même surface et présentant un pouvoir de transmission de la lumière ou un pouvoir réfléchissant pour la lumière, alternativement élevé et faible, notamment le signal de mesure (U4) associé à la piste (S4) possédant le nombre maximum de telles zones pour chaque unité d'angle.

8. Capteur de position angulaire suivant l'une des revendications précédentes, caractérisé par le fait que l'unité d'évaluation (AWE) peut être commutée de telle sorte que, lors de la rotation du disque de détection, une piste (S3,S4) du groupe comportant des zones équidistantes et de même surface présentant un pouvoir de transmission de la lumière ou un pouvoir réfléchissant pour la lumière alternativement élevé et faible pour la lumière est utilisée comme piste de référence possédant un pouvoir de transmission de la lumière ou un pouvoir réfléchissant pour la lumière, en moyenne constant.

9. Capteur de position angulaire suivant l'une des revendications précédentes, caractérisé par le fait qu'en plus du signal de mesure triangulaire (U1 à U4) pour chacune des pistes du groupe (S1 à S4), l'unité de détection (EE) prépare un signal de mesure supplémentaire triangulaire de phase opposée (U1Z18 à U4Z18) et que la différence (U1D à U4D) des deux signaux de mesure est envoyée à l'unité d'évaluation, en tant que signal de mesure électrique pour la détermination de la position angulaire absolue (ASW).

10. Capteur de position angulaire suivant l'une des revendications précédentes, caractérisé par le fait que l'unité de détection (EE) contient
    a) des détecteurs de lumière (D1 à D15), notamment des photodiodes, servant à produire des signaux de mesure électriques (U1 à U7) des pistes (S1 à S7),
    b) des multiplexeurs (MUX) servant à successivement explorer et introduire la valeur instantanée respective des différents signaux de mesure électriques dans un premier canal (AK1) de transmission d'une valeur analogique,
    c) une unité (MUXST) de commande du multiplexeur, qui sert à sélectionner le signal de mesure devant être respectivement exploré et introduit, et
    d) un premier amplificateur (V1) servant à amplifier le signal de mesure envoyé respectivement par le multiplexeur au premier canal (AK1) de transmission d'une valeur analogique, notamment pour la retransmission de ce signal par l'intermédiaire d'un câble de transmission de données (DUK), raccordé à l'unité de détection.

11. Capteur de position angulaire suivant la revendication 10, caractérisé par le fait que l'unité d'évaluation (AWE) contient
    a) un convertisseur analogique/numérique (AD) pour les signaux électriques de mesure introduits dans l'unité de détection (EE) dans le premier canal (AK1) de transmission d'une valeur analogique, et
    b) une unité de commande programmée et de calcul (PSRW), qui est raccordée, par l'intermédiaire d'une première ligne de commande (STL2), qui s'étend dans un câble de transmission de données (DUK), à l'unité (MUXSP) de commande du multiplexeur dans l'unité de détection (EE) et commande, par l'intermédiaire de cette unité, le balayage et l'introduction successive des différents signaux de mesure électriques des pistes dans le premier canal (AK1) de transmission d'une valeur analogique et qui, par évaluation des signaux de mesure électriques, notamment des pistes du groupe, envoyés successivement par le convertisseur analogique/numérique par l'intermédiaire d'un premier bus de transmission de données (DB1), détermine la position angulaire absolue (ASW) du disque de détection, rapporté à la position de référence (N).

12. Capteur de position angulaire suivant la revendication 10 ou 11, caractérisé par une unité de détection (EE) comportant un second canal (AK2) de transmission d'une valeur analogique, servant à retransmettre le signal de mesure électrique d'une piste du groupe comportant des zones équidistantes et de même surface et présentant un pouvoir de transmission de la lumière alternativement élevé et faible, notamment de la piste (S4) possédant un nombre maximum de telles zones pour chaque unité d'angle.

13. Capteur de position angulaire suivant la revendication 12, caractérisé par une unité d'évaluation (AWE) comportant un premier comparateur (K1) commandé par le second canal (AK2) de transmission d'une valeur analogique, un premier compteur (Z1) branché en aval et servant à réaliser le comptage incrémental des périodes complètes, qui apparaissent lors d'une rotation du disque de détection, du signal de mesure électrique (U4) transmis par le second canal de transmission d'une valeur analogique, et un second bus de transmission de données (DB2) servant à transmettre l'état de comptage dans l'unité de commande programmée et de calcul (PSRW).

14. Capteur de pression angulaire suivant l'une des revendications précédentes, caractérisé par au moins un capteur de Wiegand (WG1), qui sert à déterminer le nombre de rotations complètes du disque de détection et est excité par un aimant (SM) tournant avec le disque.

15. Capteur de position angulaire suivant la revendication 14, caractérisé par le fait que pour la détection du centre réel de rotation, il est prévu au moins trois capteurs de Wiegand (WG1 ou WG3), qui sont notamment disposés sur un socle en étant équidistants et sont excités successivement par l'aimant (SM) tournant avec le disque de détection.

16. Capteur de position angulaire suivant la revendication 14 ou 15, caractérisé par le fait que pour produire un signal de tension (UWG1 ou UWG3), qui possède une amplitude élevée et des flancs ayant une pente élevée, à la sortie de l'un des capteurs de wiegand, des deux côtés de l'aimant (SM) excité sont également disposés des aimants (RML, RMR), qui tournent conjointement avec le disque de détection, possèdent une aimantation inverse et déclenchent une remise à l'état initial du capteur avant l'excitation proprement dite.

FIG 1

EP 0 276 402 B1

FIG 2

FIG 3

FIG 4

EP 0 276 402 B1

FIG 5

FIG 8

FIG 6

FIG 7

FIG 9

FIG 10